# EUROPEAN PATENT APPLICATION

(11) **EP 4 576 862 A1**
(43) Date of publication of application: **25.06.2025**
(21) Application number: 23876580.4
(22) Date of filing: 07.10.2023
(51) Int. Cl.: H04W 24/02

(54) **COMMUNICATION METHOD AND RELATED DEVICE**

(30) Priority: 13.10.2022 CN 202211255551
(71) Applicant: Huawei Technologies Co., Ltd., Shenzhen, Guangdong 518129 (CN)
(72) Inventor: LAN, Qinghua, Shenzhen, Guangdong 518129 (CN); XU, Qiang, Shenzhen, Guangdong 518129 (CN); LIU, Bo, Shenzhen, Guangdong 518129 (CN)
(74) Representative: MERH-IP Matias Erny Reichl Hoffmann Patentanwälte PartG mbB
(86) International application number: PCT/CN2023/123155
(87) International publication number: WO 2024/078377

(57) **Abstract**

This application provides a communication method and a related device, to implement, in a network device including N modules, different working modes of the same network device through running of a part or all of modules included in the network device, so as to adapt to different communication scenarios, thereby reducing development costs of the network device and implementation complexity, and further optimizing a deployment mode of the network device. In the method, the network device operates a target working mode in M working modes, where M is an integer greater than or equal to 2, and the network device includes the N modules. When P modules in the N modules run, the network device operates one of the M working modes, where both N and P are positive integers.

## Description

This application claims priority to Chinese Patent Application No. 202211255551.3, filed with the China National Intellectual Property Administration on October 13, 2022 and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

Wireless communication is transmission communication between two or more communication nodes without propagation via a conductor or a cable or through propagation via an air interface. For example, the communication nodes include a network device and a terminal device. Generally, the terminal device may access the network device, and receive scheduling and indication information of the network device, to implement wireless communication.

Currently, in different communication scenarios, different network devices may be deployed to provide communication services for a terminal device. For example, in a communication scenario of a conventional base station, a base transceiver station (base transceiver station, BTS) may be deployed as a network device to provide an access service for a terminal device. For another example, in a wireless backhaul communication scenario, a base station having a backhaul capability may be deployed as a network device to provide an access service for a terminal device, and the base station can also transmit, in a backhaul manner, a service related to the terminal device.

However, with development of communication technologies, communication scenarios are increasing. The foregoing implementation easily causes problems such as high development costs of the network device and complex implementation. In view of this, how to optimize a deployment mode of a network device is a technical problem to be urgently resolved.

### SUMMARY

This application provides a communication method and a related device, to implement, in a network device including N modules, different working modes of the same network device through running of a part or all of modules included in the network device, so as to adapt to different communication scenarios, thereby reducing development costs of the network device and implementation complexity, and further optimizing a deployment mode of the network device.

A first aspect of this application provides a communication method. The method is performed by a network device, or the method is performed by a part of components (for example, a processor, a chip, or a chip system) in a network device, or the method may be implemented by a logic module or software that can implement all or a part of functions of a network device. In the first aspect and possible implementations of the first aspect, descriptions are provided by using an example in which the communication method is performed by the network device. In the method, the network device operates a target working mode in M working modes, where M is an integer greater than or equal to 2, and the network device includes N modules. When P modules in the N modules run, the network device operates one of the M working modes, where both N and P are positive integers.

Based on the foregoing technical solution, the network device may operate the target working mode in the M working modes, where M is an integer greater than or equal to 2. In the network device including the N modules, a manner of running the P modules in the N modules may enable the network device to operate one of the M working modes, and the target working mode is one of the M working modes. Therefore, compared with an implementation in which different network devices are deployed in different scenarios, this implementation implements, in a network device including N modules, different working modes of the same network device through running of a part or all of the modules included in the network device, so as to adapt to different communication scenarios, thereby reducing development costs of the network device and implementation complexity, and further optimizing a deployment mode of the network device.

In a possible implementation of the first aspect, the N modules include at least one processing module and/or at least one radio frequency link module.

Based on the foregoing technical solution, the N modules included in the network device may include the at least one processing module and/or the at least one radio frequency link module, so that the M working modes are implemented by using a combination of a function of the at least one processing module and/or a function of the at least one radio frequency link module.

Optionally, the at least one processing module is configured to process signals at protocol layers such as a physical (physical, PHY) layer (the PHY layer may also be referred to as a layer 1 (layer 1, L1)), a media access control (media access control, MAC) layer, a radio link control (radio link control, RLC) layer, a packet data convergence protocol (packet data convergence protocol, PDCP) layer (the MAC layer, the RLC layer, and the PDCP layer may also be referred to as a layer 2 (layer 2, L2)), and a radio resource control (radio resource control, RRC) layer (the RRC layer is included in a layer 3 (layer 3, L3)).

In a possible implementation of the first aspect, the processing module includes a baseband processing module and a radio frequency processing module.

Based on the foregoing technical solution, when the N modules include the at least one processing module, the at least one processing module may include a baseband processing module and a radio frequency processing module, so that a baseband signal processing process is implemented through the baseband processing module, and a radio frequency signal processing process is implemented through the radio frequency processing module.

In a possible implementation of the first aspect, the M working modes include at least two of the following working modes: an integrated access and backhaul (integrated access and backhaul, IAB) mode, a remote relay node (remote relay node, RRN) mode, a BTS mode, an enhanced digital unit (enhanced digital unit, eDU) mode, an enhanced radio unit (enhanced radio node, eRU) mode, a remote radio unit (radio remote unit, RRU) mode, or a baseband unit (baseband unit, BBU) mode.

It may be understood that the foregoing at least two working modes respectively correspond to different communication scenarios.

For example, when a working mode of the network device is the IAB mode, when a terminal device can access the network device to obtain a communication service, the network device can implement backhaul of services (including a signal/data and the like) of the terminal device based on the IAB mode.

For another example, when a working mode of the network device is the RRN mode, after a terminal device accesses another network device (for example, a base station), the network device operating the RRN mode can communicate with the another network device, to further implement backhaul of services (including a signal/data and the like) of the terminal device.

For another example, when a working mode of the network device is the BTS mode, a terminal device may access the network device to obtain a communication service corresponding to the BTS mode.

For another example, when a working mode of the network device is the eDU mode, after a terminal device accesses another network device (for example, an RRU), the network device operating the eDU mode can communicate with the another network device, to further implement backhaul of services (including a signal/data and the like) of the terminal device.

For another example, when a working mode of the network device is the eRU mode, after a terminal device accesses the network device, the network device operating the eRU mode can communicate with another network device (for example, a BBU), to further implement backhaul of services (including a signal/data and the like) of the terminal device.

For another example, when a working mode of the network device is the RRU mode, after a terminal device accesses the network device operating the RRU mode, the network device operating the RRU mode can communicate with another network device (for example, a BBU), so that the terminal device obtains a complete communication service.

For another example, when a working mode of the network device is the BBU mode, after a terminal device accesses another network device (for example, an RRU), the network device operating the BBU can communicate with the another network device, so that the terminal device obtains a complete communication service.

In a possible implementation of the first aspect, the target working mode meets at least one of the following:
when the target working mode is the IAB mode, the P modules include a processing module and a radio frequency link module in the N modules, where the processing module and the radio frequency link module operate a backhaul mode and an access mode;
when the target working mode is the RRN mode, the P modules include a processing module and a radio frequency link module in the N modules, where the processing module and the radio frequency link module operate a backhaul mode;
when the target working mode is the BTS mode, the P modules include a processing module and a radio frequency link module in the N modules, where the processing module and the radio frequency link module operate an access mode;
when the target working mode is the eDU mode, the P modules include a processing module and a radio frequency link module in the N modules, where the processing module operates an access mode and a backhaul mode, and the radio frequency link module operates a backhaul mode;
when the target working mode is the eRU mode, the P modules include a processing module and a radio frequency link module in the N modules, where the processing module operates a backhaul mode, and the radio frequency link module operates an access mode and a backhaul mode;
when the target working mode is the RRU mode, the P modules include a radio frequency link module in the N modules, where the radio frequency link module operates an access mode; or
when the target working mode is the BBU mode, the P modules include a processing module in the N modules, where the processing module operates an access mode.

Based on the foregoing technical solution, when the N modules in the network device include the processing module and the radio frequency link module, the target working mode in the M working modes may be implemented by using a combination of functions implemented by a part or both of the processing module and the radio frequency link module.

In a possible implementation of the first aspect, the target working mode meets at least one of the following:
when the target working mode is the IAB mode, the P modules include a first processing module, a second processing module, a first radio frequency link module, and a second radio frequency link module in the N modules, where the first processing module operates a backhaul mode, the second processing module operates an access mode, the first radio frequency module operates a backhaul mode, and the second radio frequency module operates an access mode;
when the target working mode is the RRN mode, the P modules include a first processing module and a first radio frequency link module in the N modules, where the first processing module and the first radio frequency link module operate a backhaul mode;
when the target working mode is the BTS mode, the P modules include a second processing module and a second radio frequency link module in the N modules, where the second processing module and the second radio frequency link module operate an access mode;
when the target working mode is the eDU mode, the P modules include a first processing module, a second processing module, and a first radio frequency link module in the N modules, where the first processing module operates a backhaul mode, the second processing module operates an access mode, and the first radio frequency link module operates a backhaul mode;
when the target working mode is the eRU mode, the P modules include a first processing module, a first radio frequency link module, and a second radio frequency link module in the N modules, where the first processing module operates a backhaul mode, the first radio frequency link module operates a backhaul mode, and the second radio frequency link module operates an access mode;
when the target working mode is the RRU mode, the P modules include a second radio frequency link module in the N modules, where the second radio frequency link module operates an access mode; or
when the target working mode is the BBU mode, the P modules include a second processing module in the N modules, where the second processing module operates an access mode.

Based on the foregoing technical solution, when the N modules in the network device include the first processing module, the second processing module, the first radio frequency link module, and the second radio frequency link module, the target working mode in the M working modes may be implemented by using a combination of functions implemented by the part or all of the N modules.

Optionally, in the foregoing technical solution, the first processing module is mainly configured to operate the backhaul mode. Therefore, the first processing module may also be referred to as a backhaul processing module, a backhaul signal processing module, a backhaul module, or another name. This is not limited in this application. Similarly, the second processing module is mainly configured to operate the access mode. Therefore, the second processing module may also be referred to as an access processing module, an access signal processing module, an access module, or another name. This is not limited in this application. Similarly, the first radio frequency link module is mainly configured to operate the backhaul mode. Therefore, the first radio frequency link module may also be referred to as a backhaul radio frequency link module, a backhaul radio frequency module, a backhaul signal radio frequency link module, a backhaul module, or another name. This is not limited in this application. Similarly, the second radio frequency link module is mainly configured to operate the access mode. Therefore, the second radio frequency link module may also be referred to as an access radio frequency link module, an access radio frequency module, an access signal radio frequency link module, an access module, or another name. This is not limited in this application.

Optionally, a mode name corresponding to the target working mode in the foregoing solution (including the IAB mode, the RRN mode, the BTS mode, the eDU mode, the eRU mode, the RRU mode, or the BBU mode) is merely an example for description. In actual application, a running process of the P modules corresponding to the target working mode is described above. For any running process of the P modules, the mode name corresponding to the target working mode may alternatively be another implementation. The mode name corresponding to the target working mode is not limited in this application.

In a possible implementation of the first aspect, the method further includes: configuring the network device to operate the target working mode.

Based on the foregoing technical solution, before the network device operates the target working mode, the network device may be further configured to operate the target working mode, so that the network device can determine, based on the configuration, to operate the target working mode in the M working modes.

In a possible implementation of the first aspect, the method further includes: receiving a user operation instruction on a user operation interface, where the user operation instruction indicates the target working mode.

Based on the foregoing technical solution, the network device may determine, by receiving the user operation instruction on the user operation interface, to configure the network device to operate the target working mode.

Optionally, the user operation instruction may include an index, a number, and the like that indicate the target working mode (or indicate the P modules corresponding to the target working mode).

Optionally, the network device may further determine, in another manner, to configure the network device to operate the target working mode. For example, a default operating working mode of the network device is pre-configured as the target working mode before delivery, or the network device receives an instruction from another device (for example, a core network device, a server, or a controller) to determine to configure the network device to operate the target working mode. This is not limited herein.

A second aspect of this application provides a network device. The network device includes N modules, and N is a positive integer. When P modules in the N modules run, the network device operates one of M working modes, where P is a positive integer, and M is an integer greater than or equal to 2. The network device operates a target working mode in the M working modes.

Based on the foregoing technical solution, the network device may operate the target working mode in the M working modes, where M is an integer greater than or equal to 2. In the network device including the N modules, a manner of running the P modules in the N modules may enable the network device to operate one of the M working modes, and the target working mode is one of the M working modes. Therefore, compared with an implementation in which different network devices are deployed in different communication scenarios, this implementation implements, in a network device including N modules, different working modes of the same network device through running of a part or all of the modules included in the network device, so as to adapt to different communication scenarios, thereby reducing development costs of the network device and implementation complexity, and further optimizing a deployment mode of the network device.

In a possible implementation of the second aspect, the N modules include at least one processing module and/or at least one radio frequency link module.

Based on the foregoing technical solution, the N modules included in the network device may include the at least one processing module and/or the at least one radio frequency link module, so that the M working modes are implemented by using a combination of a function of the at least one processing module and/or a function of the at least one radio frequency link module.

Optionally, the at least one processing module is configured to process signals at protocol layers such as a physical (physical, PHY) layer (the PHY layer may also be referred to as a layer 1 (layer 1, L1)), a media access control (media access control, MAC) layer, a radio link control (radio link control, RLC) layer, a packet data convergence protocol (packet data convergence protocol, PDCP) layer (the MAC layer, the RLC layer, and the PDCP layer may also be referred to as a layer 2 (layer 2, L2)), and a radio resource control (radio resource control, RRC) layer (the RRC layer is included in a layer 3 (layer 3, L3)).

In a possible implementation of the second aspect, the processing module includes a baseband processing module and a radio frequency processing module.

Based on the foregoing technical solution, when the N modules include the at least one processing module, the at least one processing module may include a baseband processing module and a radio frequency processing module, so that a baseband signal processing process is implemented through the baseband processing module, and a radio frequency signal processing process is implemented through the radio frequency processing module.

In a possible implementation of the second aspect, the M working modes include at least two of the following working modes: an integrated access and backhaul IAB mode, a remote relay node RRN mode, a base transceiver station BTS mode, an enhanced digital unit eDU mode, an enhanced radio unit eRU mode, a remote radio unit RRU mode, or a baseband unit BBU mode.

It may be understood that the foregoing at least two working modes respectively correspond to different communication scenarios.

For example, when a working mode of the network device is the IAB mode, when a terminal device can access the network device to obtain a communication service, the network device can implement backhaul of services (including a signal/data and the like) of the terminal device based on the IAB mode.

For another example, when a working mode of the network device is the RRN mode, after a terminal device accesses another network device (for example, a base station), the network device operating the RRN mode can communicate with the another network device, to further implement backhaul of services (including a signal/data and the like) of the terminal device.

For another example, when a working mode of the network device is the BTS mode, a terminal device may access the network device to obtain a communication service corresponding to the BTS mode.

For another example, when a working mode of the network device is the eDU mode, after a terminal device accesses another network device (for example, an RRU), the network device operating the eDU mode can communicate with the another network device, to further implement backhaul of services (including a signal/data and the like) of the terminal device.

For another example, when a working mode of the network device is the eRU mode, after a terminal device accesses the network device, the network device operating the eRU mode can communicate with another network device (for example, a BBU), to further implement backhaul of services (including a signal/data and the like) of the terminal device.

For another example, when a working mode of the network device is the RRU mode, after a terminal device accesses the network device operating the RRU mode, the network device operating in the RRU mode can communicate with another network device (for example, a BBU), so that the terminal device obtains a complete communication service.

For another example, when a working mode of the network device is the BBU mode, after a terminal device accesses another network device (for example, an RRU), the network device operating in the BBU can communicate with the another network device, so that the terminal device obtains a complete communication service.

In a possible implementation of the second aspect, the target working mode meets at least one of the following:
when the target working mode is the IAB mode, the P modules include a processing module and a radio frequency link module in the N modules, where the processing module and the radio frequency link module operate a backhaul mode and an access mode;
when the target working mode is the RRN mode, the P modules include a processing module and a radio frequency link module in the N modules, where the processing module and the radio frequency link module operate a backhaul mode;
when the target working mode is the BTS mode, the P modules include a processing module and a radio frequency link module in the N modules, where the processing module and the radio frequency link module operate an access mode;
when the target working mode is the eDU mode, the P modules include a processing module and a radio frequency link module in the N modules, where the processing module operates an access mode and a backhaul mode, and the radio frequency link module operates a backhaul mode;
when the target working mode is the eRU mode, the P modules include a processing module and a radio frequency link module in the N modules, where the processing module operates a backhaul mode, and the radio frequency link module operates an access mode and a backhaul mode;
when the target working mode is the RRU mode, the P modules include a radio frequency link module in the N modules, where the radio frequency link module operates an access mode; or
when the target working mode is the BBU mode, the P modules include a processing module in the N modules, where the processing module operates an access mode.

Based on the foregoing technical solution, when the N modules in the network device include the processing module and the radio frequency link module, the target working mode in the M working modes may be implemented by using a combination of functions implemented by a part or both of the processing module and the radio frequency link module.

In a possible implementation of the second aspect, the target working mode meets at least one of the following:
when the target working mode is the IAB mode, the P modules include a first processing module, a second processing module, a first radio frequency link module, and a second radio frequency link module in the N modules, where the first processing module operates a backhaul mode, the second processing module operates an access mode, the first radio frequency module operates a backhaul mode, and the second radio frequency module operates an access mode;
when the target working mode is the RRN mode, the P modules include a first processing module and a first radio frequency link module in the N modules, where the first processing module and the first radio frequency link module operate a backhaul mode;
when the target working mode is the BTS mode, the P modules include a second processing module and a second radio frequency link module in the N modules, where the second processing module and the second radio frequency link module operate an access mode;
when the target working mode is the eDU mode, the P modules include a first processing module, a second processing module, and a first radio frequency link module in the N modules, where the first processing module operates a backhaul mode, the second processing module operates an access mode, and the first radio frequency link module operates a backhaul mode;
when the target working mode is the eRU mode, the P modules include a first processing module, a first radio frequency link module, and a second radio frequency link module in the N modules, where the first processing module operates a backhaul mode, the first radio frequency link module operates a backhaul mode, and the second radio frequency link module operates an access mode;
when the target working mode is the RRU mode, the P modules include a second radio frequency link module in the N modules, where the second radio frequency link module operates an access mode; or
when the target working mode is the BBU mode, the P modules include a second processing module in the N modules, where the second processing module operates an access mode.

Based on the foregoing technical solution, when the N modules in the network device include the first processing module, the second processing module, the first radio frequency link module, and the second radio frequency link module, the target working mode in the M working modes may be implemented by using a combination of functions implemented by the part or all of the N modules.

Optionally, in the foregoing technical solution, the first processing module is mainly configured to operate the backhaul mode. Therefore, the first processing module may also be referred to as a backhaul processing module, a backhaul signal processing module, a backhaul module, or another name. This is not limited in this application. Similarly, the second processing module is mainly configured to operate the access mode. Therefore, the second processing module may also be referred to as an access processing module, an access signal processing module, an access module, or another name. This is not limited in this application. Similarly, the first radio frequency link module is mainly configured to operate the backhaul mode. Therefore, the first radio frequency link module may also be referred to as a backhaul radio frequency link module, a backhaul radio frequency module, a backhaul signal radio frequency link module, a backhaul module, or another name. This is not limited in this application. Similarly, the second radio frequency link module is mainly configured to operate the access mode. Therefore, the second radio frequency link module may also be referred to as an access radio frequency link module, an access radio frequency module, an access signal radio frequency link module, an access module, or another name. This is not limited in this application.

Optionally, a mode name corresponding to the target working mode in the foregoing solution (including the IAB mode, the RRN mode, the BTS mode, the eDU mode, the eRU mode, the RRU mode, or the BBU mode) is merely an example for description. In actual application, a running process of the P modules corresponding to the target working mode is described above. For any running process of the P modules, the mode name corresponding to the target working mode may alternatively be another implementation. The mode name corresponding to the target working mode is not limited in this application.

A third aspect of this application provides a communication apparatus. The communication apparatus can implement the method in any one of the first aspect or the possible implementations of the first aspect. The communication apparatus includes a corresponding unit or module configured to perform the foregoing method. The unit or module included in the communication apparatus may be implemented in a software and/or hardware manner. For example, the apparatus may be a network device, or the apparatus may be a component (for example, a processor, a chip, or a chip system) in a network device, or the apparatus may be a logic module or software that can implement all or a part of functions of a network device.

The communication apparatus includes a processing unit. The processing unit is configured to perform the steps performed in the possible implementations of the first aspect, and implement corresponding technical effect. For details, refer to the first aspect. Details are not described herein again.

Optionally, the communication apparatus further includes a transceiver unit. The transceiver unit is configured to perform the steps performed in the possible implementations of the first aspect, and implement corresponding technical effect. For details, refer to the first aspect. Details are not described herein again.

A fourth aspect of this application provides a communication apparatus, including at least one processor. The at least one processor is coupled to a memory. The processor is configured to perform the method according to any one of the first aspect or the possible implementations of the first aspect. For example, the memory is configured to store a program or instructions. The at least one processor is configured to execute the program or the instructions, to enable the apparatus to implement the method according to any one of the first aspect or the possible implementations of the first aspect.

Optionally, it can be learned from the first aspect that the communication apparatus may include N modules. The at least one processor may be included in the N modules, or the at least one processor may be independent of the N modules. This is not limited herein.

A fifth aspect of this application provides a communication apparatus, including at least one logic circuit and an input/output interface. The logic circuit is configured to perform the method according to any one of the first aspect or the possible implementations of the first aspect.

A sixth aspect of this application provides a computer-readable storage medium storing one or more computer-executable instructions. When the computer-executable instructions are executed by a processor, the processor performs the method according to any one of the first aspect or the possible implementations of the first aspect.

A seventh aspect of this application provides a computer program product (or referred to as a computer program). When the computer program product is executed by a processor, the processor performs the method according to any one of the first aspect or the possible implementations of the first aspect.

An eighth aspect of this application provides a chip system. The chip system includes at least one processor, configured to support a communication apparatus in implementing functions in any one of the first aspect or the possible implementations of the first aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A ninth aspect of this application provides a communication system. The communication system includes the communication apparatus according to the second aspect, or the communication system includes the communication apparatus according to the third aspect, or the communication system includes the communication apparatus according to the fourth aspect.

For technical effect brought by any design of the third aspect to the ninth aspect, refer to the technical effect brought by the first aspect or the second aspect and different design manners thereof. Details are not described herein again.

### BRIEF DESCRIPTION OF DRAWINGS

FIG. 1 to FIG. 2b are diagrams of communication systems according to this application;
FIG. 3 is a diagram of a communication method according to this application;
FIG. 4a to FIG. 11b are diagrams of network devices according to this application;
FIG. 12 is a diagram of a network device according to this application; and
FIG. 13 to FIG. 15 are diagrams of communication apparatuses according to this application.

### DESCRIPTION OF EMBODIMENTS

The following describes technical solutions of this application with reference to accompanying drawings. All other solutions obtained by a person of ordinary skill in the art based on this application without creative efforts shall fall within the protection scope of this application.

Some terms in this application are first described, so as to help a person skilled in the art have an understanding.
(1) A terminal device may be a wireless terminal device that can receive scheduling and indication information of a network device. The wireless terminal device may be a device that provides a user with voice and/or data connectivity, or a handheld device with a wireless connection function, or another processing device connected to a wireless modem.
   The terminal device may communicate with one or more core networks or the internet via a radio access network (radio access network, RAN). The terminal device may be a mobile terminal device, for example, a cellphone (or referred to as a "cellular" phone or mobile phone (mobile phone)), a computer, or a data card. Alternatively, the terminal device may be a portable, pocket-sized, handheld, computer built-in, or in-vehicle mobile apparatus that exchanges language and/or data with the radio access network. Alternatively, the terminal device may be a device like a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like. Alternatively, the terminal device may be a wearable device or a terminal device in a next-generation communication system, for example, a terminal device in a 6th generation (6-Generation, 6G) communication system or a terminal device in a future evolved public land mobile network (public land mobile network, PLMN).
(2) A network device may be a device in a wireless network. For example, the network device may be a radio access network (radio access network, RAN) node (or device) that connects a terminal device to the wireless network, and may also be referred to as a base station. Some examples of the RAN device are: a next-generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), and the like. In addition, in a network structure, the network device may be a module or a unit that implements a part of functions of the base station. The module or unit may be referred to as an access network module, an access network element, or an access network unit. This is not limited. For example, the network device may be a central unit (centralized unit, CU) node, a distributed unit (distributed unit, DU) node, or a RAN device including a CU node and a DU node. Alternatively, the network device may be a module or unit in an open access network (open RAN, ORAN or O-RAN). For example, the network device may be a CU, a DU, a CU-CP, a CU-UP, or a radio unit (radio unit, RU) in the O-RAN.

In some implementations, the network device may further include a satellite, an airplane, or the like.

In addition, in another possible case, the network device may be another apparatus providing a wireless communication function for the terminal device. A specific technology and a specific device form that are used by the network device are not limited in this application. For ease of description, this is not limited in this application.

Optionally, the network device may further include a core network device. The core network device includes, for example, an access and mobility management function (access and mobility management function, AMF), a user plane function (user plane function, UPF), or a session management function (session management function, SMF).

In this application, an apparatus configured to implement a function of the network device may be a network device, or may be an apparatus, for example, a processor, a chip, or a chip system, that can support the network device in implementing the function. The apparatus may be mounted in the network device, or may be used in combination with the network device. In the technical solutions provided in this application, an example in which the apparatus configured to implement the function of the network device is the network device is used to describe the technical solutions provided in this application.

In this application, an apparatus configured to implement a function of the terminal device may be a terminal device, or may be an apparatus, for example, a processor, a chip, or a chip system, that can support the terminal device in implementing the function. The apparatus may be mounted in the terminal device, or may be used in combination with the terminal device. In the technical solutions provided in this application, an example in which the apparatus configured to implement the function of the terminal device is the terminal device is used to describe the technical solutions provided in this application.

(3) The terms "system" and "network" may be used interchangeably in this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to a long term evolution (long term evolution, LTE) system, a new radio (new radio, NR) system, an O-RAN system, or an new radio vehicle-to-everything (NR vehicle-to-everything, NR V2X) system; a system of hybrid networking of a plurality of access technologies (such as LTE and 5G); a device-to-device (device-to-device, D2D) communication system, a machine to machine (machine to machine, M2M) communication system, internet of things (Internet of Things, IoT), or an uncrewed aerial vehicle communication system; a communication system that supports a plurality of wireless technologies, for example, an LTE technology and an NR technology; or a non-terrestrial communication system, for example, a satellite communication system, or a high-altitude communication platform. In addition, optionally, this application may also be applied to a narrowband internet of things (narrow band internet of things, NB-IoT) system, an enhanced data rate global system for mobile communications (global system for mobile communications, GSM) evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronization code division multiple access, TD-SCDMA) system, a system to which a future-oriented communication technology is applied, or another communication system.

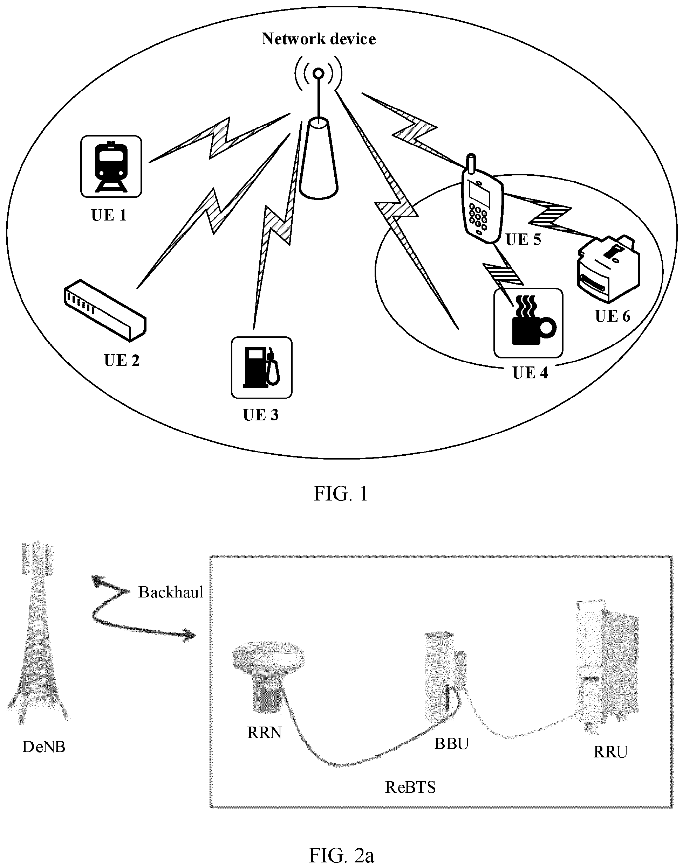

FIG. 1 is a diagram of an application scenario according to an embodiment of this application.

As shown in FIG. 1, terminal devices (including UE 1 to UE 6 in the figure) may access a network device, and receive scheduling and indication information of the network device, to implement wireless communication. For example, a downlink information (for example, scheduling information, paging information, indication information, or configuration information) sending entity may be the network device, and downlink information receiving entities may be the UE 1 to the UE 6. In this case, the network device and the UE 1 to the UE 6 form a communication system. In the communication system, the UE 1 to the UE 6 may send uplink data to the network device, and the network device receives the uplink data sent by the UE 1 to the UE 6. Currently, in different communication scenarios, different network devices may be deployed to adapt to a plurality of different communication scenarios.

In a possible implementation, in a communication scenario of a conventional base station, a base transceiver station (base transceiver station, BTS) may be deployed as a network device to provide an access service for a terminal device. In addition, a transmission link between the BTS and a core network device is usually borne in a wired transmission manner (for example, a cable or an optical fiber).

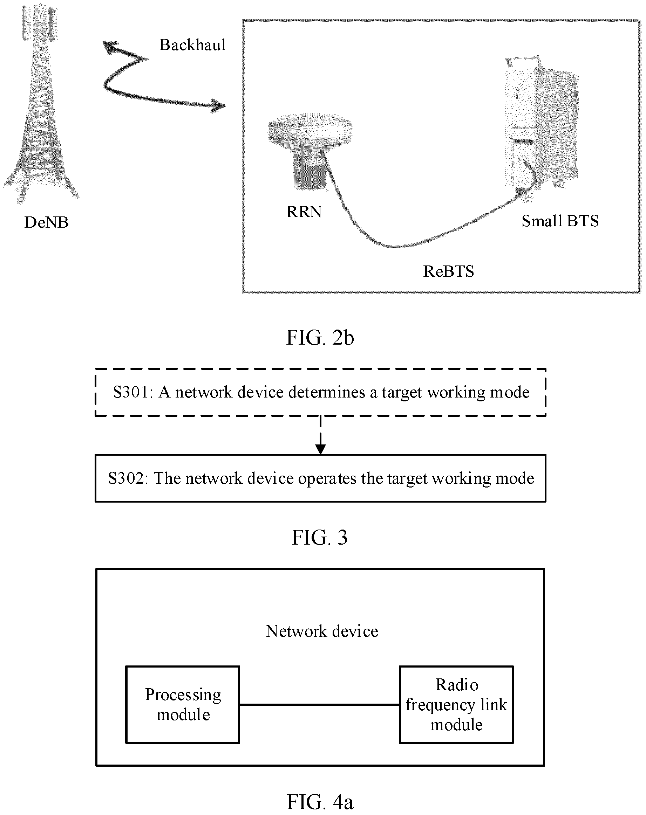

In another possible implementation, as a quantity of deployed network devices increases, in an area in which wired transmission cannot be constructed and an area in which a construction condition is not met, transmission construction may be performed in a wireless backhaul manner. During wireless backhaul, a wireless relay (relay) backhaul technology is an important means. In a wireless backhaul communication scenario, a base station having a backhaul capability may be deployed as a network device. While providing an access service for a terminal device, the network device can further transmit a service related to the terminal device in a backhaul manner. The network device may be referred to as a relay base transceiver station (relay base transceiver station, ReBTS). Generally, the wireless relay backhaul technology depends on a remote relay node (remote relay node, RRN) device. When the wireless relay backhaul technology is used, a requirement for co-deployment of an RRN device and a conventional base station may be generated. The following provides example descriptions with reference to manners shown in FIG. 2a and FIG. 2b.

In an example shown in FIG. 2a, an RRN device, a BBU device, and an RRU device form a ReBTS in a wired transmission manner for implementation, and the ReBTS communicates with a remote donor node (for example, the donor node may be denoted as a donor NodeB (donor eNodeB, DeNB)) in a backhaul manner. In actual application, the RRN device, the baseband unit (baseband unit, BBU) device, and the remote radio unit (radio remote unit, RRU) device are respectively used as independent devices, and are independently implemented through three different boxes (boxes).

In an example shown in FIG. 2b, an RRN device and a small BTS form a ReBTS in a wired transmission manner for implementation, and the ReBTS communicates with a remote DeNB in a backhaul manner. The small BTS may also be referred to as an integrated base station, and is a special base station form. Specifically, the small BTS is a base station integrating a conventional BBU function and an RRU function, is generally used in a small-capacity scenario, and is usually referred to as a small base station. In actual application, the RRN device and the small BTS are respectively used as independent devices, and are independently implemented through two different boxes. A system capacity of the ReBTS is not limited in this application. For example, the system capacity of the ReBTS may be less than or equal to a system capacity of the DeNB.

It can be learned from the examples shown in FIG. 2a and FIG. 2b that the foregoing solution needs to be implemented through two or more split deployments, resulting in high costs and a large quantity of boxes. Consequently, actual deployment is difficult. For example, in remote rural areas, electric power is usually unstable and solar energy or diesel generators are required, which may greatly increase power supply costs. In urban capacity scenarios, a large quantity of boxes require more deployment space, resulting in high costs.

In conclusion, how to optimize a deployment mode of the network device is a technical problem to be urgently resolved.

To resolve the foregoing problem, this application provides a communication method and a related device, to implement, in a network device including N modules, different working modes of the same network device through running of a part or all of modules included in the network device, so as to adapt to different communication scenarios, thereby reducing development costs of the network device and implementation complexity, and further optimizing a deployment mode of the network device. The following describes the solutions of this application in detail with reference to the accompanying drawings. N is a positive integer.

FIG. 3 is a diagram of a communication method according to this application. The method is performed by a network device, or the method is performed by a part of components (for example, a processor, a chip, or a chip system) in a network device, or the method may be implemented by a logic module or software that can implement all or a part of functions of a network device. In the following descriptions, descriptions are provided by using an example in which the communication method is performed by the network device. The method includes the following steps.

S301: The network device determines a target working mode.

S302: The network device operates the target working mode.

The network device includes N modules; and when P modules in the N modules run, the network device operates one of M working modes, where both N and P are positive integers. The N modules may also be referred to as N units, N functions, N sub-devices, or other names. This is not limited. In step S301, the network device determines the target working mode in the M working modes, where M is an integer greater than or equal to 2. In addition, after the network device determines the target working mode in step S301, the network device operates the target working mode in step S302.

In a possible implementation, a default operating working mode of the network device is pre-configured as the target working mode before delivery. Correspondingly, step S301 is an optional step. To be specific, the network device performs step S302 by default, and does not need to perform step S301.

In a possible implementation, the network device needs to determine the target working mode in a configuration manner in step S301. In other words, the network device is configured to operate the target working mode, so that the network device can determine, based on the configuration, to operate the target working mode in the M working modes. Optionally, the configuration may be further changed, that is, may be reconfigured.

Optionally, the network device may determine, in step S301 by receiving a user operation instruction on a user operation interface, to configure the network device to operate the target working mode.

Optionally, the user operation instruction may include an index, a number, and the like that indicate the target working mode (or indicate the P modules corresponding to the target working mode).

Optionally, the network device may further determine, in another manner, to configure the network device to operate the target working mode. For example, the network device receives an instruction from another device (for example, a core network device, a server, or a controller), to determine to configure the network device to operate the target working mode. This is not limited herein.

In a possible implementation, the N modules include at least one processing module and/or at least one radio frequency link module. The N modules included in the network device may include the at least one processing module and/or the at least one radio frequency link module, so that the M working modes are implemented by using a combination of a function of the at least one processing module and/or a function of the at least one radio frequency link module. The radio frequency link module may also be referred to as a radio frequency communication module.

Optionally, the at least one processing module is configured to process signals at at least one of the following protocol layers: a physical (physical, PHY) layer (the PHY layer may also be referred to as a layer 1 (layer 1, L1)), a media access control (media access control, MAC) layer, a radio link control (radio link control, RLC) layer, a packet data convergence protocol (packet data convergence protocol, PDCP) layer (the MAC layer, the RLC layer, and the PDCP layer may also be referred to as a layer 2 (layer 2, L2)), a radio resource control (radio resource control, RRC) layer (the RRC layer is included in a layer 3 (layer 3, L3)), a service data adaptation protocol (service data adaptation protocol, SDAP), or the like.

In a possible implementation, the processing module includes a baseband processing module and a radio frequency processing module. When the N modules include the at least one processing module, the at least one processing module may include a baseband processing module and a radio frequency processing module, so that a baseband signal processing process is implemented through the baseband processing module, and a radio frequency signal processing process is implemented through the radio frequency processing module.

Based on the technical solution shown in FIG. 3, the network device may operate the target working mode in the M working modes in step S302, where M is an integer greater than or equal to 2. In the network device including the N modules, a manner of running the P modules in the N modules may enable the network device to operate one of the M working modes, and the target working mode is one of the M working modes. Therefore, compared with an implementation in which different network devices are deployed in different communication scenarios, this implementation implements, in a network device including N modules, different working modes of the same network device through running of a part or all of the modules included in the network device, so as to adapt to different communication scenarios, thereby reducing development costs of the network device and implementation complexity, and further optimizing a deployment mode of the network device.

The following describes the M working modes of the network device provided in this application with reference to more implementation examples.

In a possible implementation, the M working modes include at least two of the following working modes: an integrated access and backhaul (integrated access and backhaul, IAB) mode, an RRN mode, a BTS mode, an enhanced digital unit (enhanced digital unit, eDU) mode, an enhanced radio unit (enhanced radio node, eRU) mode, an RRU mode, or a BBU mode.

It may be understood that the at least two working modes respectively correspond to different communication scenarios.

For example, when a working mode of the network device is the IAB mode, when a terminal device can access the network device to obtain a communication service, the network device can implement backhaul of services (including a signal/data and the like) of the terminal device based on the IAB mode.

For another example, when a working mode of the network device is the RRN mode, after a terminal device accesses another network device (for example, a base station), the network device operating the RRN mode can communicate with the another network device, to further implement backhaul of services (including a signal/data and the like) of the terminal device.

For another example, when a working mode of the network device is the BTS mode, a terminal device may access the network device to obtain a communication service corresponding to the BTS mode.

For another example, when a working mode of the network device is the eDU mode, after a terminal device accesses another network device (for example, an RRU), the network device operating the eDU mode can communicate with the another network device, to further implement backhaul of services (including a signal/data and the like) of the terminal device.

For another example, when a working mode of the network device is the eRU mode, after a terminal device accesses the network device, the network device operating the eRU mode can communicate with another network device (for example, a BBU), to further implement backhaul of services (including a signal/data and the like) of the terminal device.

For another example, when a working mode of the network device is the RRU mode, after a terminal device accesses the network device operating the RRU mode, the network device operating the RRU mode can communicate with another network device (for example, a BBU), so that the terminal device obtains a complete communication service.

For another example, when a working mode of the network device is the BBU mode, after a terminal device accesses another network device (for example, an RRU), the network device operating the BBU can communicate with the another network device, so that the terminal device obtains a complete communication service.

With reference to some implementation examples, the following describes the target working mode in the at least two working modes by using examples.

In a possible implementation, the target working mode meets at least one of the following:
when the target working mode is the IAB mode, the P modules include a processing module and a radio frequency link module in the N modules, where the processing module and the radio frequency link module operate a backhaul mode and an access mode;
when the target working mode is the RRN mode, the P modules include a processing module and a radio frequency link module in the N modules, where the processing module and the radio frequency link module operate a backhaul mode;
when the target working mode is the BTS mode, the P modules include a processing module and a radio frequency link module in the N modules, where the processing module and the radio frequency link module operate an access mode;
when the target working mode is the eDU mode, the P modules include a processing module and a radio frequency link module in the N modules, where the processing module operates an access mode and a backhaul mode, and the radio frequency link module operates a backhaul mode;
when the target working mode is the eRU mode, the P modules include a processing module and a radio frequency link module in the N modules, where the processing module operates a backhaul mode, and the radio frequency link module operates an access mode and a backhaul mode;
when the target working mode is the RRU mode, the P modules include a radio frequency link module in the N modules, where the radio frequency link module operates an access mode; or
when the target working mode is the BBU mode, the P modules include a processing module in the N modules, where the processing module operates an access mode.

For example, as shown in FIG. 4a, in the foregoing technical solution, when the N modules in the network device include the processing module and the radio frequency link module, the target working mode in the M working modes may be implemented by using a combination of functions implemented by a part or both of the processing module and the radio frequency link module.

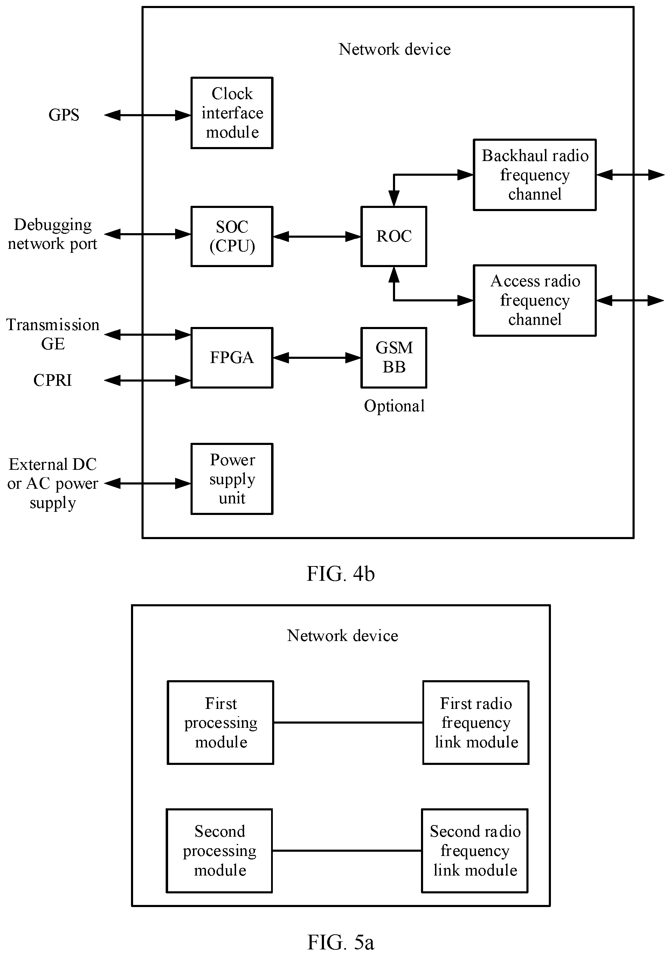

In an implementation example in FIG. 4a, as shown in FIG. 4b, descriptions are provided by using an example in which the processing module includes a system-on-a-chip (system-on-chip, SOC) and a radio on chip (radio on chip, ROC) in FIG. 4b and the radio frequency link module includes a backhaul radio frequency channel and an access radio frequency channel in FIG. 4b. The following describes, by using an example, a process performed by each component in the example shown in FIG. 4b.

The SOC includes a processing function of a central processing unit (central processing unit, CPU), a possible memory function, and the like. In the network device, the SOC is configured to support main control, transmission, and baseband processing and digital intermediate frequency processing of a layer 1 (L1), a layer 2 (L2), and a layer 3 (L3) of a relay (Relay) in a plurality of communication standards (for example, 4G, 5G, and 6G). Optionally, the SCO may be an application-specific integrated chip (application-specific integrated circuit, ASIC).

The ROC generally has functions such as digital-to-analog converter (digital-to-analog converter, DAC) and analog-to-digital converter (analog-to-digital converter, ADC) conversion, signal attenuation and amplification, and frequency mixing.

Optionally, the ROC may further integrate a transmitter (transmitter, TX) ADC, a receiver (receiver, RX), a feedback (feedback, FB) analog-to-digital converter (analog-to-digital converter, ADC), a local oscillator, and the like, and integrate partial transceiver (including TX and RX, TRX for short), amplification, frequency mixing, and other functions.

Optionally, the ROC may use a zero intermediate frequency (zero intermediate frequency, ZIF) architecture, and support sharing of a TX/RX/FB channel in the foregoing standards.

Optionally, the ROC may be a radio frequency integrated circuit (radio frequency integrated circuit, RFIC) chip.

The backhaul radio frequency channel and the access radio frequency channel may also be referred to as radio frequency TRX modules, and provide uplink and downlink radio frequency signal processing functions.

Optionally, the backhaul radio frequency channel may also be referred to as an RRN radio frequency channel.

Optionally, the access radio frequency channel may be used to access signals of a GSM, a universal mobile telecommunications system (universal mobile telecommunications system, UMTS), an LTE system (the GSM, the UMTS, and the LTE system may be referred to as GUL), an NR system, and other RATs/standards.

Optionally, the network device may further include other modules shown in FIG. 4b:
A clock interface module is configured to implement clock synchronization via a global positioning system (global positioning system, GPS), the Ethernet, or the like.

A GSM baseband (GSM BB for short) chip mainly implements baseband processing of a GSM signal, and generally implements processing of an L1 signal. A microprocessor (digital signal processor, DSP) needs to participate in signal calculation and processing, and processing such as L2 and L3 processing is generally implemented in the SOC. Optionally, if the SOC supports GSM signal processing (or the network device does not need to be configured with a GSM function), the network device may not need to be configured with the GSM baseband chip.

A field-programmable gate array (field-programmable gate array, FPGA) mainly implements switching and selection of different interfaces in various modes, where the interfaces include a common public radio interface (common public radio interface, CPRI), a gigabit ethernet (gigabit ethernet, GE) optical port, a GE electrical port, and the like. Optionally, the FPGA may also include framing and deframing processing of the GSM signal.

A power supply module supports power supply for a part or all of modules in the network device.

Optionally, a signal processing procedure of the network device shown in FIG. 4b is as follows:
Uplink: A received signal is filtered and amplified, and a filtered and amplified signal enters the ROC and is directly down-converted to a zero frequency in the ROC; AD conversion is performed on a zero-frequency signal through a low-pass filter; and a converted signal enters the ASIC, and the ASIC processes the signal according to an intermediate frequency algorithm and then sends a processed signal to the SOC.

Downlink: The SOC performs sample rate conversion (sample rate converter, SRC) on a signal according to an algorithm, clips the signal, and sends a clipped signal to the ROC for DAC or ADC conversion or direct up-conversion. After being amplified by a power amplifier and filtered by a filter, a converted signal is transmitted through an antenna.

It can be learned from the implementation examples shown in FIG. 4a and FIG. 4b that the ASIC implements signal main control and transmission, L1/L2/L3 baseband processing, and digital intermediate frequency processing, and completes main control and transmission functions of a GSM inside an ASIC chip. Then, the ASIC leads out a GSM signal as an emergency channel, and is connected to a dedicated GSM baseband chip through an adapter FPGA to complete L1 baseband processing. After the processing, a digital intermediate frequency channel is used to connect the ROC and a radio frequency TRX link to process uplink and downlink signals of the GSM.

In a possible implementation, when a plurality of implementations corresponding to the target working mode are applied to an architecture shown in FIG. 4b, hardware functional modules included in the network device and time synchronization modes may be different. The following provides example descriptions with reference to content shown in Table 1.

**Table 1**

| | IAB mode | RRN mode | BTS mode | eDU mode | eRU mode | Universal set of hardware included in the network device |
|---|---|---|---|---|---|---|
| Hardware functional module | SOC+ROC +backhaul radio frequency channel+acc ess radio frequency channel | SOC+ROC+ba ckhaul radio frequency channel | SOC+ROC+ access radio frequency channel | SOC+RO C+backh aul radio frequency channel | SOC+ROC +backhaul radio frequency link+access radio frequency channel | SOC+ROC+ba ckhaul radio frequency channel+acces s radio frequency channel |
| Time synchroniza tion mode | Air interface synchroniza tion | Air interface synchronizatio n | GPS/1588V2 /Ethernet | GPS/158 8V2/Ethe rnet | The CPRI recovers clock synchroniza tion | All clock synchronizatio n modes that may be involved |

It can be learned from the content shown in Table 1 that the network device is designed based on the universal set of the hardware (in other words, the network device includes the SOC, the ROC, the backhaul radio frequency channel, and the access radio frequency channel, and supports a plurality of clock synchronization modes), and implements a multi-mode architecture by controlling software and hardware switches, to operate the target working mode based on a requirement.

In an implementation example, when the target working mode is the IAB mode, hardware functional modules run by the network device include the SOC configured to process a backhaul signal and an access signal, the ROC configured to process a backhaul radio frequency signal and an access radio frequency signal, the backhaul radio frequency channel, and the access radio frequency channel (and a possible FPGA configured to implement transmission over an electrical/optical port). In addition, 1588V2, the Ethernet, or the air interface synchronization mode is selected for a clock working mode. The clock interface module performs switching. An interface module switch is designed in the FPGA. Different switch modes are developed in a same BIN. Transmission GE and CPRI ports are processed by an FPGA interface module. In the IAB mode, the transmission GE and CPRI ports are disabled, and internal data is directly looped back over a TRAN port.

In an implementation example, when the target working mode is the RRN mode, hardware functional modules run by the network device include the SOC configured to process a backhaul signal, the ROC configured to process a backhaul radio frequency signal, and the backhaul radio frequency channel (and a possible FPGA configured to implement transmission over an electrical/optical port). In addition, the network device may select an internal clock source through the clock interface module. A transmission GE port is enabled through an internal switch of the FPGA, and a CPRI port is disabled. In addition, the ROC controls an access TX/RX channel to be disabled, and an access radio frequency channel to be disabled.

In an implementation example, when the target working mode is the BTS mode, the mode may also be referred to as an integrated small base station. Hardware functional modules run by the network device include the SOC configured to process an access signal, the ROC configured to process an access radio frequency signal, and the access radio frequency channel (and a possible FPGA configured to implement transmission over an electrical/optical port). In addition, the network device may select a required clock based on a configuration requirement, and may select GPS/1588V2/Ethernet. A CPRI port is disabled, a transmission GE port backhaul channel is enabled, a ROC backhaul channel TX/RX channel is disabled, and a backhaul radio frequency channel is disabled.

In an implementation example, when the target working mode is the eDU mode, RRN and the BBU functions are supported in this mode, and hardware functional modules run by the network device include the SOC configured to process a backhaul signal and an access signal, the ROC configured to process a backhaul radio frequency signal, and the backhaul radio frequency channel (and a possible FPGA configured to implement transmission over an electrical/optical port). In addition, GPS/1588V2/Ethernet may be selected for a clock of the network device. A CPRI port and a transmission GE port channel are enabled, and a ROC access channel is controlled to be disabled.

In an implementation example, when the target working mode is the eRU mode, hardware functional modules run by the network device include the SOC configured to process an access signal, the ROC configured to process a backhaul radio frequency signal and an access radio frequency signal, the backhaul radio frequency channel, and the access radio frequency channel (and a possible FPGA configured to implement transmission over an electrical/optical port). In addition, the network device may enable a CPRI port and a transmission GE port channel, recover clock synchronization through the CPRI, and control a ROC backhaul channel to be disabled.

In an implementation example, when the target working mode is the BBU mode, a BBU baseband processing function is provided, and hardware functional modules run by the network device include an SOC configured to process an access signal (and a possible FPGA configured to implement transmission over an electrical/optical port). In addition, GPS/1588V2/Ethernet may be selected for a clock of the network device. A CPRI port and a transmission GE port channel are enabled, and a ROC and a subsequent radio frequency channel are controlled to be disabled.

In an implementation example, when the target working mode is the RRU mode, only an RRU function is implemented, and a BBU is externally connected. Hardware functional modules run by the network device include a ROC configured to process an access radio frequency signal, and an access radio frequency channel (and a possible FPGA configured to implement transmission over an electrical port/optical port). In addition, the network device may control an internal switch of the FPGA, select a CPRI port, control ROC access and radio frequency channels to work, and disable a backhaul channel.

In this way, seamless switching between a plurality of working modes is implemented in different software and hardware control manners, thereby greatly improving hardware adaptability and expanding a hardware application scope. In addition, compared with a conventional implementation in which a network device uses one software package to correspond to one piece of hardware, in the foregoing technical solution, a software resource is fully utilized, and a software architecture is adjusted, so that a scalability problem in various hardware modes is effectively resolved, and good scalability is achieved. In addition, key advantages, for example, high integration and low costs, of an integrated backhaul and access small base station are maintained.

In an implementation example, when integrated access and backhaul is implemented, corresponding implementations of the target working mode in different implementations are shown in Table 2.

**Table 2**

| | Macro base station solution | Small base statio n soluti on | IAB mod e | RRN mode | BTS mode | eDU mode | eRU mode | BBU mode | RRU mode |
|---|---|---|---|---|---|---|---|---|---|
| Qua ntity of boxe s | 3 | 2 | 1 | 3 | 2 | 2 | 2 | 3 | 3 |
| | BBU+RR U+RRN | BTS+ RRN | Net work devi ce | Network device+ex ternally connected BBU and RRU | Network device+ex ternally connected RRN | Network device+ex ternally connected RRU | Network device+ex ternally connected BBU | Network device+ex ternally connected RRU and RRN | Network device+ex ternally connected BBU and RRN |

It can be learned from the foregoing plurality of implementation examples that the network device provided in this application supports integration of an RRN used for wireless backhaul and an access BTS base station, so that deployment is simplified, deployment is flexible, and scalability is high. In addition, a plurality of other working modes may be derived from an RRN+BTS integrated mode. In actual implementation, a same set of hardware and software package is used. Software automatically selects a corresponding working mode based on customer interface configuration. An architecture is flexible, and requirements of a customer in various scenarios is flexibly adapted. For example, when a network scenario changes and there is no relay donor station, satellite transmission is used first, and a base station is established in the BTS mode. With evolution of a network, after a donor station condition is met and an RRN is reachable, a base station is established in the IAB mode to reduce a satellite transmission rental. Subsequently, with further evolution of the network and an increase in a network capacity, a base station may be established in another mode. Configuration needs to be changed without replacing a module. In this way, costs of the customer are greatly saved. Module types are unified, which greatly reduces internal development costs.

In a possible implementation, the target working mode meets at least one of the following:
when the target working mode is the IAB mode, the P modules include a first processing module, a second processing module, a first radio frequency link module, and a second radio frequency link module in the N modules, where the first processing module operates a backhaul mode, the second processing module operates an access mode, the first radio frequency module operates a backhaul mode, and the second radio frequency module operates an access mode;
when the target working mode is the RRN mode, the P modules include a first processing module and a first radio frequency link module in the N modules, where the first processing module and the first radio frequency link module operate a backhaul mode;
when the target working mode is the BTS mode, the P modules include a second processing module and a second radio frequency link module in the N modules, where the second processing module and the second radio frequency link module operate an access mode;
when the target working mode is the eDU mode, the P modules include a first processing module, a second processing module, and a first radio frequency link module in the N modules, where the first processing module operates a backhaul mode, the second processing module operates an access mode, and the first radio frequency link module operates a backhaul mode;
when the target working mode is the eRU mode, the P modules include a first processing module, a first radio frequency link module, and a second radio frequency link module in the N modules, where the first processing module operates a backhaul mode, the first radio frequency link module operates a backhaul mode, and the second radio frequency link module operates an access mode;
when the target working mode is the RRU mode, the P modules include a second radio frequency link module in the N modules, where the second radio frequency link module operates an access mode; or
when the target working mode is the BBU mode, the P modules include a second processing module in the N modules, where the second processing module operates an access mode.

For example, as shown in FIG. 5a, in the foregoing technical solution, when the N modules in the network device include the first processing module, the second processing module, the first radio frequency link module, and the second radio frequency link module, the target working mode in the M working modes may be implemented by using the combination of the functions implemented by the part or all of the N modules.

Optionally, in the foregoing technical solution, the first processing module is mainly configured to operate the backhaul mode. Therefore, the first processing module may also be referred to as a backhaul processing module, a backhaul signal processing module, a backhaul module, or another name. This is not limited in this application. Similarly, the second processing module is mainly configured to operate the access mode. Therefore, the second processing module may also be referred to as an access processing module, an access signal processing module, an access module, or another name. This is not limited in this application. Similarly, the first radio frequency link module is mainly configured to operate the backhaul mode. Therefore, the first radio frequency link module may also be referred to as a backhaul radio frequency link module, a backhaul radio frequency module, a backhaul signal radio frequency link module, a backhaul module, or another name. This is not limited in this application. Similarly, the second radio frequency link module is mainly configured to operate the access mode. Therefore, the second radio frequency link module may also be referred to as an access radio frequency link module, an access radio frequency module, an access signal radio frequency link module, an access module, or another name. This is not limited in this application.

Optionally, a mode name corresponding to the target working mode in the foregoing solution (including the IAB mode, the RRN mode, the BTS mode, the eDU mode, the eRU mode, the RRU mode, or the BBU mode) is merely an example for description. In actual application, a running process of the P modules corresponding to the target working mode is described above. For any running process of the P modules, the mode name corresponding to the target working mode may alternatively be another implementation. The mode name corresponding to the target working mode is not limited in this application.

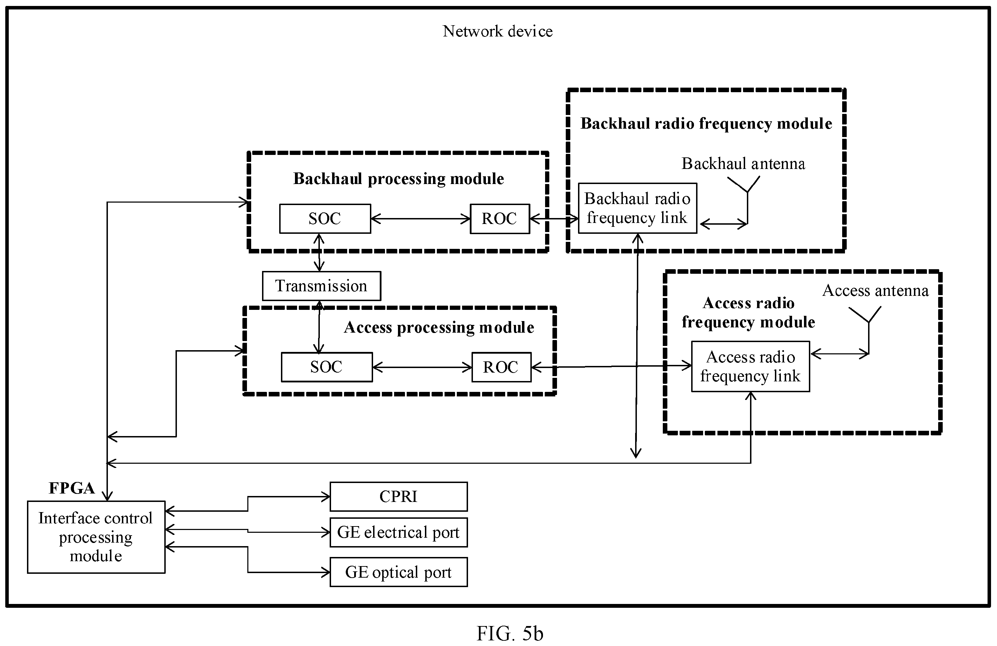

In an implementation example in FIG. 5a, as shown in FIG. 5b, descriptions are provided by using an example in which the first processing module is a backhaul processing module, the second processing module is an access processing module, the first radio frequency link module is a backhaul radio frequency module, and the second radio frequency link module is an access radio frequency module.

In FIG. 5b, the backhaul processing module may include an SOC (which may be referred to as a backhaul SOC) and a ROC (which may be referred to as a backhaul ROC); and the access processing module may include an SOC (which may be referred to as an access SOC) and a ROC (which may be referred to as an access ROC). For implementation processes of the SOC and the RCO, refer to the foregoing manner shown in FIG. 4b for implementation. Details are not described herein again.

Optionally, the network device may further include modules such as an FPGA shown in FIG. 5b. For an implementation process of the FPGA, refer to the manner shown in FIG. 4b. Details are not described herein again.

It should be noted that, for an implementation in which a combination of components in an implementation process shown in FIG. 5b enables the network device to operate the target working mode (including the IAB mode, the RRN mode, the BTS mode, the eDU mode, the eRU mode, the RRU mode, or the BBU mode), refer to the implementation process shown in FIG. 4b. In addition, corresponding technical effect is implemented. Details are not described herein again.

Optionally, implementations of the at least one processing module and the at least one radio frequency link module in the network device shown in FIG. 4a and FIG. 5a are merely implementation examples. In the foregoing implementation examples, a same processing module (and/or a same radio frequency link module) may be occupied for the target working mode in different implementation cases. However, in actual application, the target working mode may be implemented through different processing modules (and/or different radio frequency link modules) in different implementation cases. For example, the network device may include M processing modules and/or M radio frequency link modules, so that the target working mode uses different modules in different implementation cases.

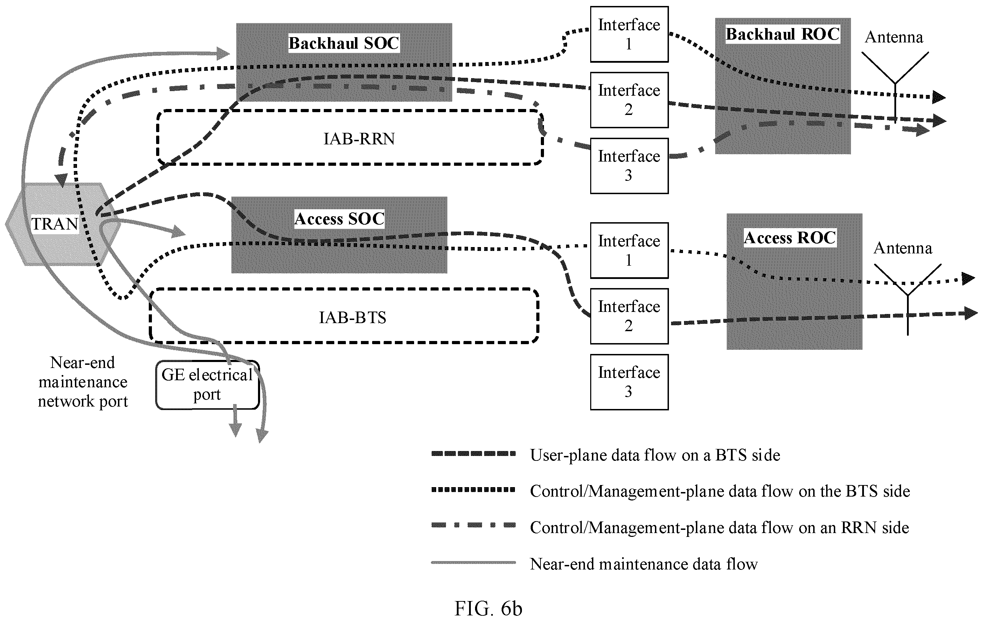

To facilitate understanding of a signal processing process performed by the network device in the target working mode in the foregoing plurality of implementations, the following provides example descriptions with reference to more accompanying drawings. It should be understood that, in the following examples shown in FIG. 6b, FIG. 7b, FIG. 8b, FIG. 9b, FIG. 10b, and FIG. 11b, descriptions are provided by using an example in which the first processing module in the N modules in the network device is a backhaul SOC, the second processing module is an access SOC, the first radio frequency link module is a backhaul ROC, and the second radio frequency link module is an access ROC.

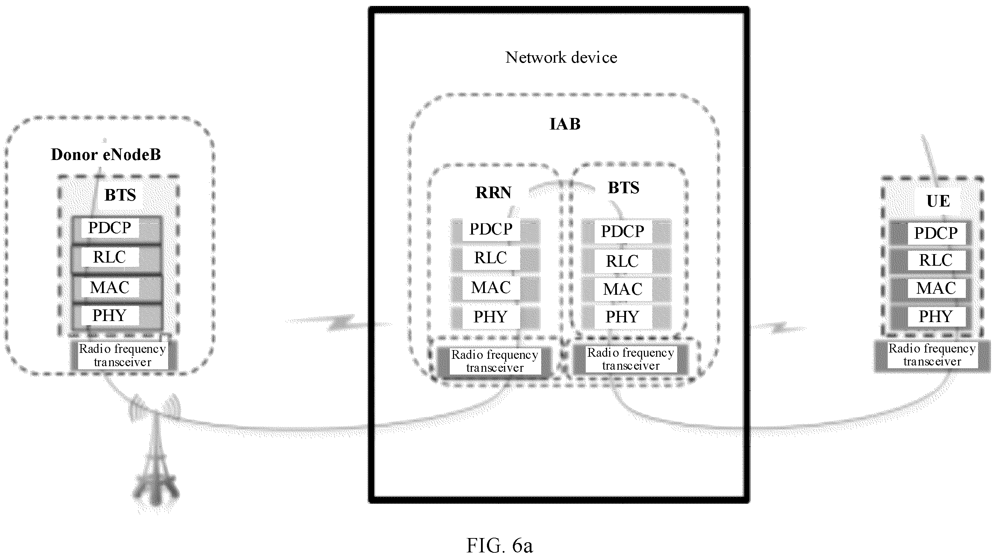

In an implementation example, FIG. 6a and FIG. 6b are diagrams of signal processing processes performed by the network device when the target working mode is the IAB mode.

In FIG. 6a, when the target working mode that the network device operates is the IAB mode, the network device may include an RRN configured to operate a backhaul mode and a BTS operating an access mode. The RRN operating the backhaul mode may include a processing module that processes signals at "a PDCP layer, an RLC layer, a MAC layer, and a PHY layer" shown in the figure, and may further include a radio frequency link module corresponding to a "radio frequency transceiver" shown in the figure. Similarly, the BTS operating in the access mode may include a processing module that processes signals at "a PDCP layer, an RLC layer, a MAC layer, and a PHY layer" shown in the figure, and may further include a radio frequency link module corresponding to a "radio frequency transceiver" shown in the figure.

In FIG. 6a, the network device may be used as a communication relay, that is, IAB, between a terminal device (in the example shown in FIG. 6a, the terminal device is UE) and an IAB donor node (in the example shown in FIG. 6a, the IAB donor node is a donor eNodeB).

In an implementation example, when the UE performs access, in a rural network scenario, the UE usually accesses the IAB through an omnidirectional antenna. The BTS inside the IAB processes data and forwards processed data to the RRN for processing. Then, the IAB is connected to the donor eNodeB through an antenna and an air interface, and then the donor eNodeB accesses devices such as a base station controller, a core network, and a wireless network management system M2000.

In another implementation example, in an urban blind spot filling scenario, the UE accesses the IAB through a built-in antenna, the IAB is usually connected to the donor station through a small panel antenna and an air interface after passing through the IAB, and then the donor station accesses a base station controller, a core network, a wireless network management system M2000, and the like.

FIG. 6b is a diagram of a flow direction of a data flow existing when the target working mode that the network device operates is the IAB mode. As shown in FIG. 6b, an uplink user-plane data flow is processed by an access ROC and an access SOC that correspond to a BTS, and then a processed uplink user-plane data flow is forwarded to a backhaul SOC and a backhaul ROC that correspond to an RRN through an internal interface (in FIG. 6b and the following descriptions, descriptions are provided by using an example in which the internal interface is denoted as a transmission (transmission, TRAN)) for processing. Then, IAB is connected to a donor station, and the donor station accesses a core network. A downlink is reverse. In addition, an implementation of a control-plane data flow is similar to that of the user-plane data flow. The only difference is that the control-plane data flow needs to be processed on an L3 control plane. In addition, the RRN does not have a service data flow and forwards data of the BTS. The control-plane data flow and a management-plane data flow are processed in the RRN.

Optionally, FIG. 6b may further include a near-end maintenance data flow. The near-end maintenance data flow mainly means that maintenance data of the RRN and the BTS is connected to a near-end maintenance network port through the TRAN.

Optionally, in the example shown in FIG. 6b, a user-plane data flow on a BTS side, a control/management-plane data flow on the BTS side, and a control/management-plane data flow on an RRN side are respectively transmitted through an interface 1, an interface 2, and an interface 3. In actual application, any two of the three interfaces may be implemented through a same physical/virtual interface. This is not limited in this application.

It can be learned from the foregoing descriptions that the implementations of the IAB mode shown in FIG. 6a and FIG. 6b may be applied to scenarios that have strict requirements on power consumption and costs, such as a remote rural coverage scenario or the urban blind spot filling scenario. Core advantages are a small quantity of station boxes, and extremely low power consumption and costs.

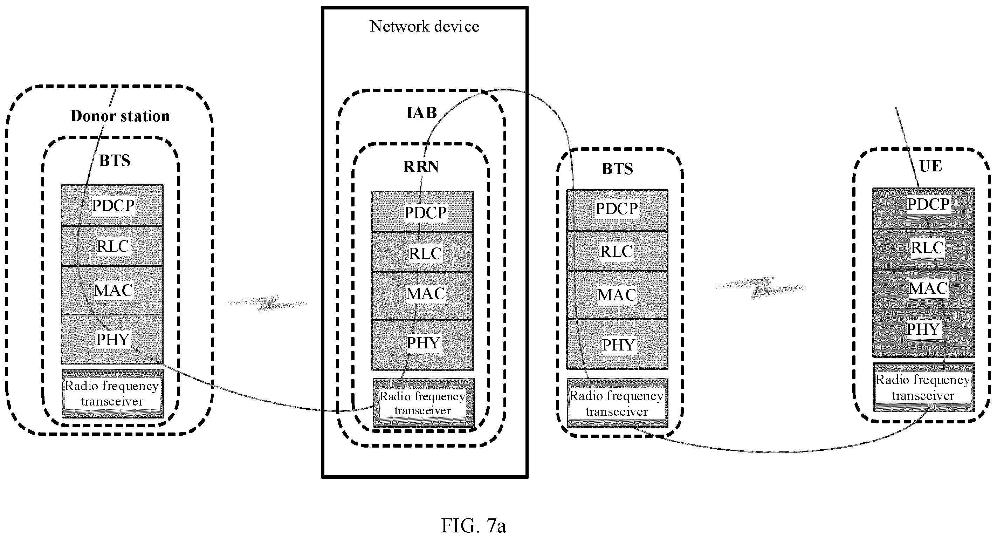

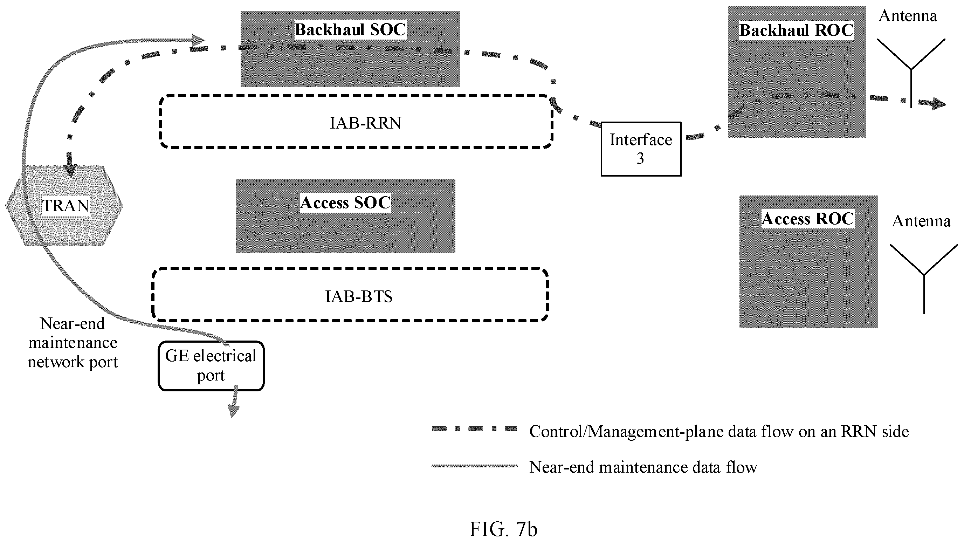

In an implementation example, FIG. 7a and FIG. 7b are diagrams of signal processing processes performed by the network device when the target working mode is the RRN mode.

In FIG. 7a, when the target working mode that the network device operates is the RRN mode, the network device may include an RRN configured to operate a backhaul mode. The RRN operating the backhaul mode may include a processing module that processes signals at "a PDCP layer, an RLC layer, a MAC layer, and a PHY layer" shown in the figure, and may further include a radio frequency link module corresponding to a "radio frequency transceiver" shown in the figure.

In FIG. 7a, the network device may be combined with an externally connected BTS, and the combination is used as a communication relay, that is, IAB, between a terminal device (in the example shown in FIG. 7a, the terminal device is UE) and an IAB donor node (in the example shown in FIG. 7a, the IAB donor node is a donor station).

FIG. 7b is a diagram of a flow direction of a data flow existing when the target working mode that the network device operates is the RRN mode. As shown in FIG. 7b, a backhaul SOC and a backhaul ROC that correspond to an RRN do not have service data flows, and need to forward data of an externally connected BTS. A control-plane data flow and a management-plane data flow are processed in the RRN.

Optionally, in the implementation example shown in FIG. 7b, an access SOC and an access ROC in the network device may not relate to the signal processing process. The access SOC and the access ROC in the network device may be set to a working state like a silent, sleep, or power-off state, or may be another implementation. This is not limited herein.

Optionally, in the example shown in FIG. 7b, an example in which a control/management-plane data flow on an RRN side is transmitted through an interface 3 is used. In actual application, the interface 3 (or another interface that may exist, for example, other two interfaces shown in FIG. 6b) in the network device may be further configured to transmit a user-plane data flow on a BTS side, a control/management-plane data flow on the BTS side, and the like that are related to the network device in another working mode. This is not limited in this application.

Optionally, FIG. 7b may further include a near-end maintenance data flow. The near-end maintenance data flow mainly means that maintenance data of the RRN and the externally connected BTS is connected to a near-end maintenance network port through a TRAN.

It can be learned from the foregoing descriptions that the implementations of the RRN mode shown in FIG. 7a and FIG. 7b may be applied to a remote rural coverage scenario or an urban blind spot filling scenario, and are mainly oriented to a scenario in which wired backhaul is not available, a scenario in which wireless backhaul is an NLOS, a scenario in which a BTS base station needs to flexibly select a frequency band, a capacity, and a transmit power value, and other scenarios. Advantages are that a backhaul capacity is high, and a base station may be flexibly selected as required.

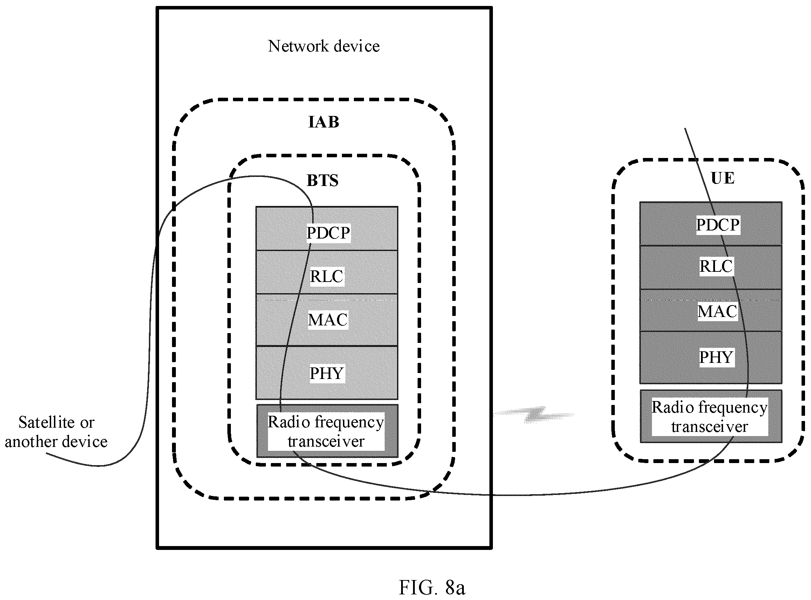

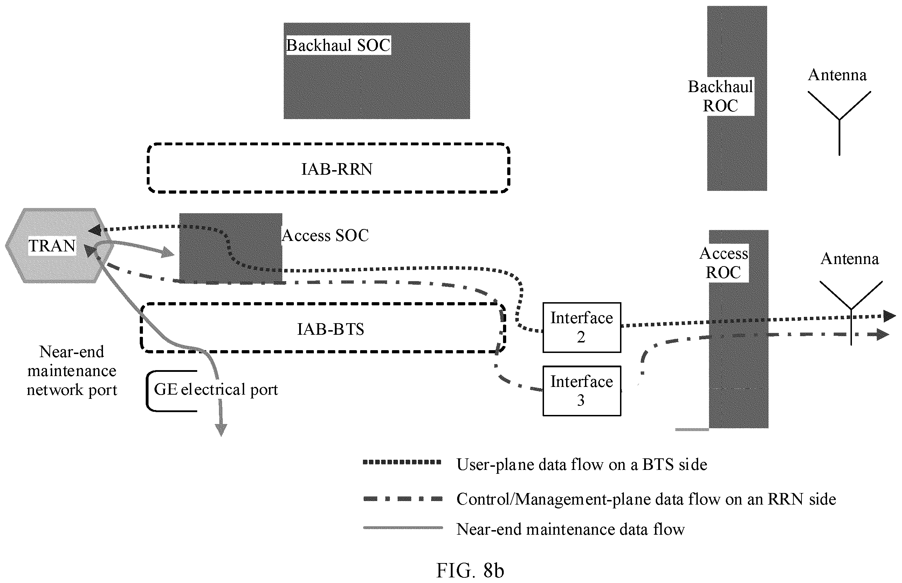

In an implementation example, FIG. 8a and FIG. 8b are diagrams of signal processing processes performed by the network device when the target working mode is the BTS mode.

In FIG. 8a, when the target working mode that the network device operates is the BTS mode, the network device may include a BTS configured to operate an access mode. The BTS operating the access mode may include a processing module that processes signals at "a PDCP layer, an RLC layer, a MAC layer, and a PHY layer" shown in the figure, and may further include a radio frequency link module corresponding to a "radio frequency transceiver" shown in the figure.

In FIG. 8a, the network device may be used as an independent base station to communicate with a terminal device (in the example shown in FIG. 8a, the terminal device is UE). Alternatively, the network device may be used as an access network device between a terminal device and a satellite or another device (for example, a core network device), so that the terminal device implements another communication service through the satellite or the another device.

FIG. 8b is a diagram of a flow direction of a data flow existing when the target working mode that the network device operates is the BTS mode. As shown in FIG. 8b, an uplink user-plane data flow is locally processed through an access SOC and an access ROC that correspond to a BTS, or an uplink user-plane data flow is forwarded to a satellite (or another device) through an internal interface (in FIG. 8b and the following descriptions, descriptions are provided by using an example in which the internal interface is a TRAN) for processing. A downlink is reverse. An implementation of a BTS control-plane data flow is similar to that of the user-plane data flow. The only difference is that the BTS control-plane data flow needs to be processed on an L3 control plane.

Optionally, in the implementation example shown in FIG. 8b, a backhaul SOC and a backhaul ROC in the network device may not relate to the signal processing process. The access backhaul SOC and the backhaul ROC in the network device may be set to a working state like a silent, sleep, or power-off state, or may be another implementation. This is not limited herein.

Optionally, in the example shown in FIG. 8b, a user-plane data flow on a BTS side is transmitted through an interface 2 and a control/management-plane data flow on an RRN side is transmitted through an interface 3. In actual application, the interface 2 or the interface 3 (or another interface that may exist, for example, another interface shown in FIG. 6b) in the network device may be further configured to transmit a control/management-plane data flow on the BTS side and the like that are related to the network device in another working mode. This is not limited in this application.

It can be learned from the foregoing descriptions that the implementations of the BTS mode shown in FIG. 8a and FIG. 8b may be applied to a remote rural coverage scenario or an urban blind spot filling scenario, and are mainly oriented to a scenario in which an RRN is unreachable and a scenario in which a satellite or a microwave needs to be used.

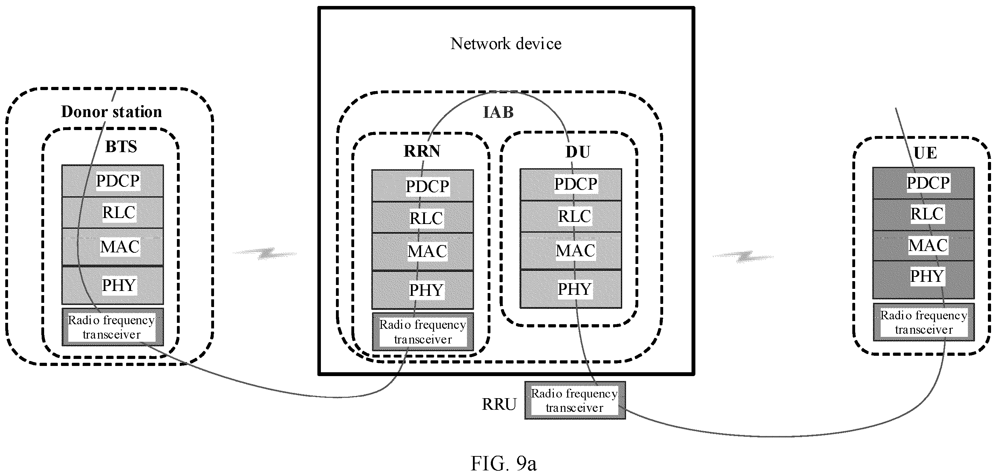

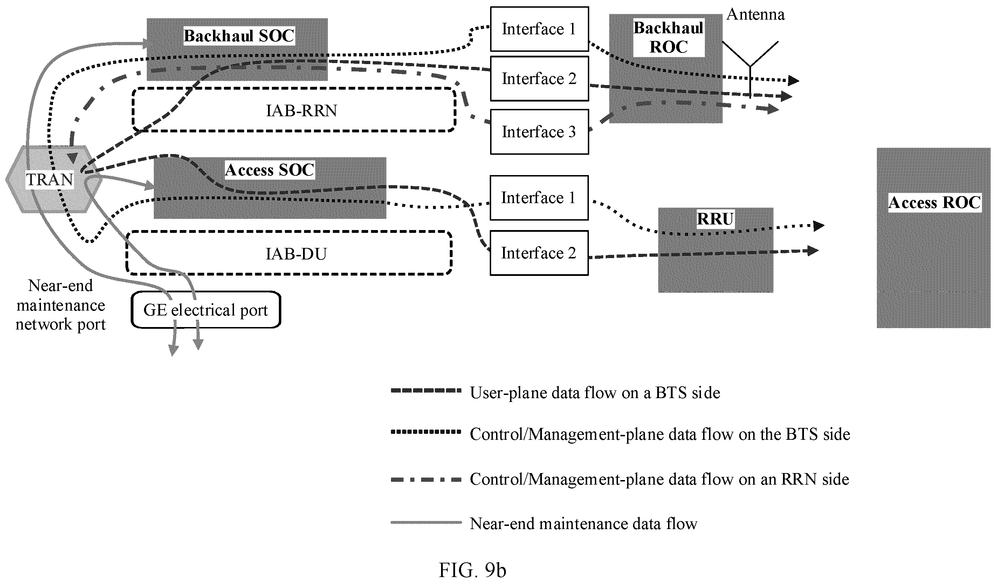

In an implementation example, FIG. 9a and FIG. 9b are diagrams of signal processing processes performed by the network device when the target working mode is the eDU mode.

In FIG. 9a, when the target working mode that the network device operates is the eDU mode, the network device may include an RRN configured to operate a backhaul mode and a DU operating an access mode. The RRN operating the backhaul mode may include a processing module that processes signals at "a PDCP layer, an RLC layer, a MAC layer, and a PHY layer" shown in the figure, and may further include a radio frequency link module corresponding to a "radio frequency transceiver" shown in the figure. Similarly, the DU operating the access mode may include a processing module that processes signals at "a PDCP layer, an RLC layer, a MAC layer, and a PHY layer" shown in the figure.

In FIG. 9a, the network device may be combined with a radio frequency transceiver module of an externally connected RRU, and the combination is used as a communication relay, that is, IAB, between a terminal device (in the example shown in FIG. 9a, the terminal device is UE) and an eDU donor node (in the example shown in FIG. 9a, the eDU donor node is a donor station).

In an implementation example, when the UE performs access, in a rural network scenario, data is usually processed by the RRU externally connected to the IAB, then processed data is processed by the DU inside the IAB, and subsequently processed data is forwarded to the RRN for processing. Then, the IAB is connected to the donor eNodeB through an antenna and an air interface, and then the donor eNodeB accesses devices such as a base station controller, a core network, and a wireless network management system M2000.

In another implementation example, in an urban blind spot filling scenario, the UE accesses the IAB through a built-in antenna, the IAB is usually connected to the donor station through a small panel antenna and an air interface after passing through the IAB, and then the donor station accesses a base station controller, a core network, a wireless network management system M2000, and the like.

FIG. 9b is a diagram of a flow direction of a data flow existing when the target working mode that the network device operates is the eDU mode. As shown in FIG. 9b, an uplink user-plane data flow is processed by an externally connected RRU, then a processed uplink user-plane data flow is sent to an access SOC corresponding to an RRU inside IAB for processing, and then a processed data flow is forwarded to a backhaul SOC and a backhaul ROC in an RRN through a TRAN for processing. Then, the IAB is connected to a donor station, and the donor station accesses a core network. A downlink is reverse. An implementation of a BTS control-plane data flow is similar to that of the user-plane data flow. The only difference is that the BTS control-plane data flow needs to be processed on an L3 control plane. In addition, the RRN does not have a service data flow and forwards data of a BTS. A control-plane data flow and a management-plane data flow are processed in the RRN.

Optionally, in a scenario shown in FIG. 9b, an access ROC does not participate in signal processing.

Optionally, FIG. 9b may further include a near-end maintenance data flow. The near-end maintenance data flow mainly means that maintenance data of the RRN and the BTS is connected to a near-end maintenance network port through the TRAN.

Optionally, in the example shown in FIG. 9b, a user-plane data flow on a BTS side, a control/management-plane data flow on the BTS side, and a control/management-plane data flow on an RRN side are respectively transmitted through an interface 1, an interface 2, and an interface 3. In actual application, any two of the three interfaces may be implemented through a same physical/virtual interface. This is not limited in this application.

It can be learned from the foregoing descriptions that, compared with the IAB mode shown in FIG. 6a and FIG. 6b, the implementations of the eDU mode shown in FIG. 9a and FIG. 9b can support more flexible access frequency bands and transmit power because the RRU is externally disposed, to improve more application scenarios and wider coverage.

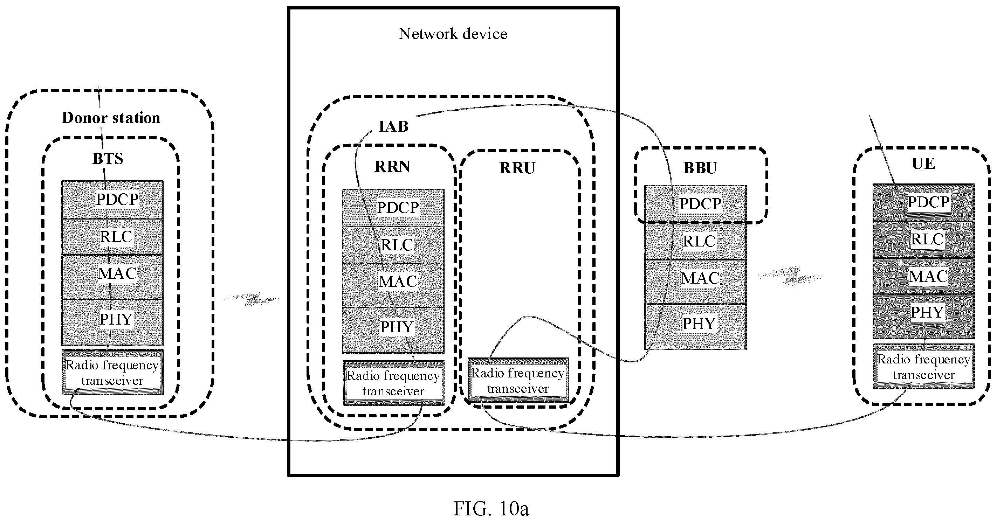

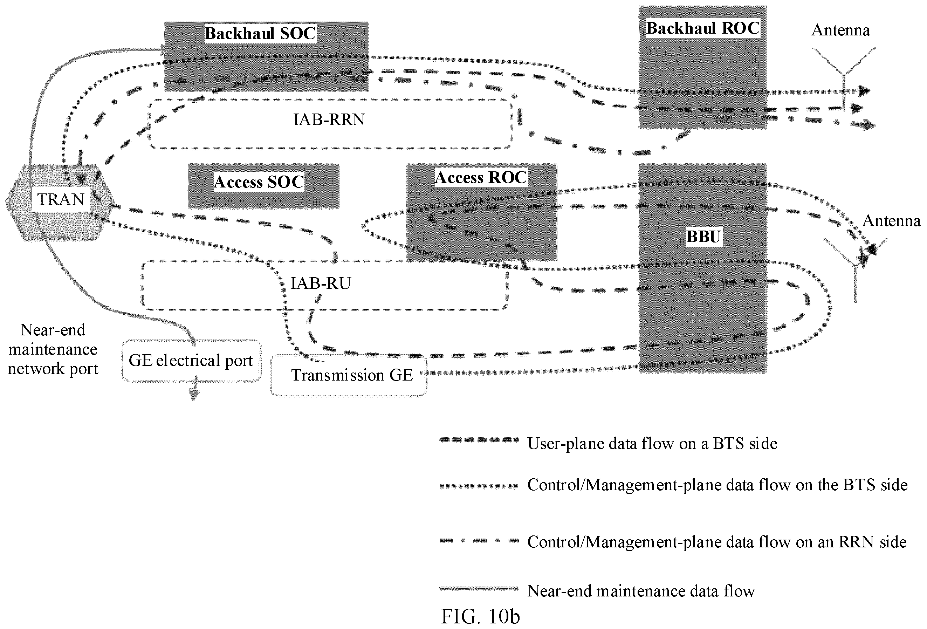

In an implementation example, FIG. 10a and FIG. 10b are diagrams of signal processing processes performed by the network device when the target working mode is the eRU mode.

In FIG. 10a, when the target working mode that the network device operates is the eRU mode, the network device may include an RRN configured to operate a backhaul mode and an RRU operating an access mode. The RRN operating the backhaul mode may include a processing module that processes signals at "a PDCP layer, an RLC layer, a MAC layer, and a PHY layer" shown in the figure, and may further include a radio frequency link module corresponding to a "radio frequency transceiver" shown in the figure. Similarly, the RRU operating the access mode may include a radio frequency link module corresponding to a "radio frequency transceiver" shown in the figure.

In FIG. 10a, the network device may be combined with a processing module of an externally connected BBU, and the combination is used as a communication relay, that is, IAB, between a terminal device (in the example shown in FIG. 10a, the terminal device is UE) and an eRU donor node (in the example shown in FIG. 10a, the eRU donor node is a donor station).

In an implementation example, when the UE performs access, in a rural network scenario, data is usually processed by the RRU inside the IAB, then processed data is forwarded to the BBU externally connected to the IAB for processing, and subsequently processed data is forwarded to the RRN for processing. Then, the IAB is connected to the donor eNodeB through an antenna and an air interface, and then the donor eNodeB accesses devices such as a base station controller, a core network, and a wireless network management system M2000.

In another implementation example, in an urban blind spot filling scenario, the UE accesses the IAB through a built-in antenna, the IAB is usually connected to the donor station through a small panel antenna and an air interface after passing through the IAB, and then the donor station accesses a base station controller, a core network, a wireless network management system M2000, and the like.

FIG. 10b is a diagram of a flow direction of a data flow existing when the target working mode that the network device operates is the eRU mode. As shown in FIG. 10b, an uplink user-plane data flow is processed by an access ROC corresponding to an RRU inside IAB, then a processed uplink user-plane data flow is sent to a BBU externally connected to the IAB for processing, and then a processed uplink user-plane data flow is forwarded, through a transmission GE port, to a backhaul SOC and a backhaul ROC that correspond to an RRN for processing. Then, IAB is connected to a donor station, and the donor station accesses to a core network. A downlink is reverse. An implementation of a BTS control-plane data flow is similar to that of the user-plane data flow. The only difference is that the BTS control-plane data flow needs to be processed on an L3 control plane. In addition, the RRN does not have a service data flow and forwards data of a BTS. A control-plane data flow and a management-plane data flow are processed in the RRN.

Optionally, in a scenario shown in FIG. 10b, an access SOC does not participate in signal processing. Optionally, in the example shown in FIG. 10b, a related data flow may alternatively be transmitted between the backhaul SOC and the backhaul ROC through one or more interfaces (not shown in the figure). In addition, there may be a similar interface between the access SOC and the access ROC, so that the network device can support transmission of the related data flow when operating another working mode. For details, refer to the foregoing embodiments (for example, related embodiments such as the embodiments in FIG. 6b and FIG. 9b). Details are not described herein.

Optionally, FIG. 10b may further include a near-end maintenance data flow. The near-end maintenance data flow mainly means that maintenance data of the RRN and the BTS is connected to a near-end maintenance network port through a TRAN, and near-end maintenance of the access ROC is processed at a near end of the BBU externally connected to the IAB.

It can be learned from the foregoing descriptions that, compared with the IAB mode shown in FIG. 6a and FIG. 6b, the implementations of the eRU mode shown in FIG. 10a and FIG. 10b can support more flexible access standards and different capacities because the BBU is externally disposed, to improve more application scenarios and a larger capacity.

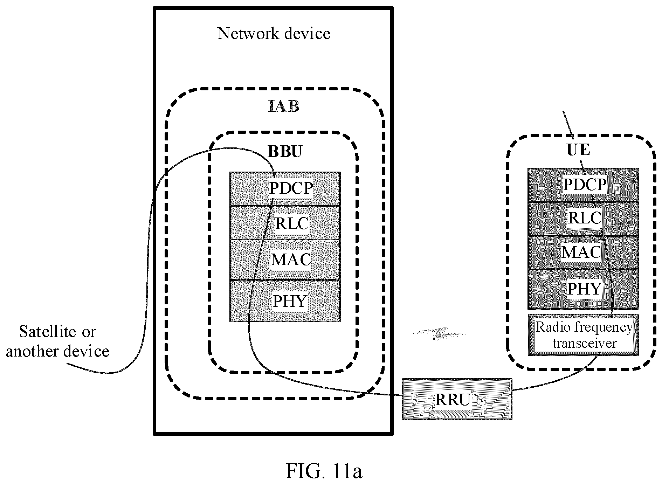

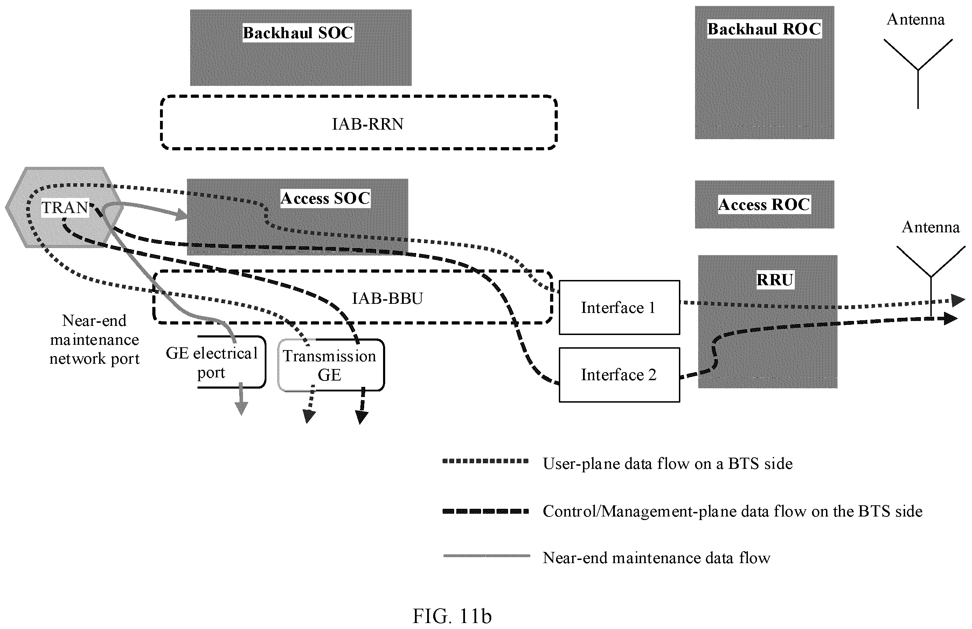

In an implementation example, FIG. 11a and FIG. 11b are diagrams of signal processing processes performed by the network device when the target working mode is the BBU mode.

In FIG. 11a, when the target working mode that the network device operates is the BBU mode, the network device may include a BBU configured to operate an access mode. The BBU operating the access mode may include a processing module that processes signals at "a PDCP layer, an RLC layer, a MAC layer, and a PHY layer" shown in the figure.

In FIG. 11a, the network device may be combined with an externally connected BBU, and the combination may communicate with a terminal device (in the example shown in FIG. 11a, the terminal device is UE). Alternatively, the combination may be used as an access network device between a terminal device and a satellite or another device (for example, a core network device), so that the terminal device implements another communication service through the satellite or the another device.

FIG. 11b is a diagram of a flow direction of a data flow existing when the target working mode that the network device operates is the BBU mode. As shown in FIG. 11b, an uplink user-plane data flow is processed by an externally connected RRU, then a processed uplink user-plane data flow is sent to an access SOC corresponding to a BBU inside IAB, and the access SOC further processes the processed uplink user-plane data flow. Alternatively, an access SOC forwards an uplink user-plane data flow to a satellite (or another device) through an interface for processing. A downlink is reverse. An implementation of a BBU control-plane data flow is similar to that of the user-plane data flow. The only difference is that the BBU control-plane data flow needs to be processed on an L3 control plane.

Optionally, in the implementation example shown in FIG. 11b, an access ROC, a backhaul SOC, and a backhaul ROC in the network device may not relate to the signal processing process. The access ROC, the backhaul SOC, and the backhaul ROC in the network device may be set to a working state like a silent, sleep, or power-off state, or may be another implementation. This is not limited herein.

Optionally, in the example shown in FIG. 11b, a user-plane data flow on a BTS side and a control/management-plane data flow on the BTS side are respectively transmitted through an interface 1 and an interface 2. In actual application, the interface 1 or the interface 2 (or another interface that may exist, for example, another interface shown in FIG. 6b) in the network device may be further configured to transmit a control/management-plane data flow on an RRN side and the like that are related to the network device in another working mode. This is not limited in this application.

It can be learned from the foregoing descriptions that, compared with the independent BTS mode shown in FIG. 8a and FIG. 8b, the implementations of the BBU mode shown in FIG. 11a and FIG. 11b can support more flexible access standards and different capacities, to improve more application scenarios and a larger capacity.

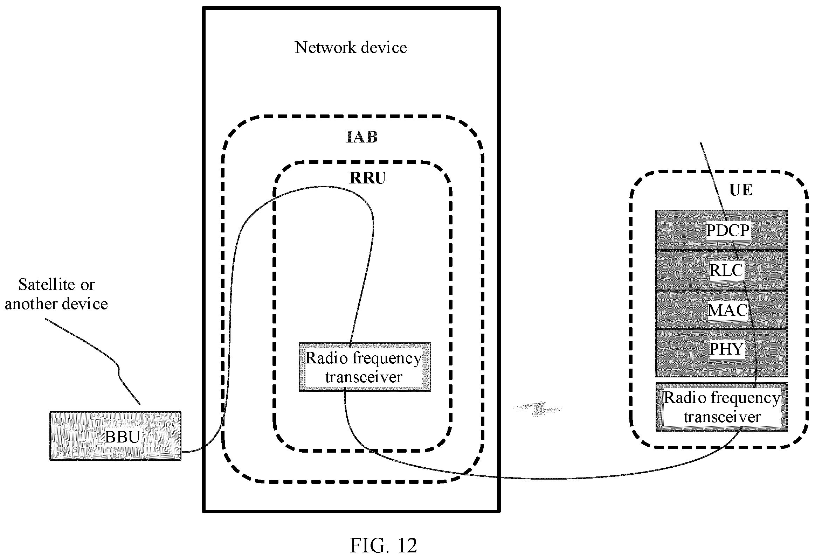

In an implementation example, FIG. 12 is a diagram of a signal processing process performed by the network device when the target working mode is the RRU mode.

In FIG. 12, when the target working mode that the network device operates is the RRU mode, the network device may include an RRU configured to operate an access mode. The RRU operating the access mode may include a processing module that processes signals at "a PDCP layer, an RLC layer, a MAC layer, and a PHY layer" shown in the figure.

In FIG. 12, the network device may be combined with an externally connected BBU, and the combination may communicate with a terminal device (in the example shown in FIG. 12, the terminal device is UE). Alternatively, the combination may be used as an access network device between a terminal device and a satellite or another device (for example, a core network device), so that the terminal device implements another communication service through the satellite or the another device.

It should be understood that, in FIG. 12, when the target working mode that the network device operates is the RRU mode, an uplink user-plane data flow is processed by the RRU inside the IAB, then a processed uplink user-plane data flow is sent to the BBU externally connected to the IAB, and the BBU further processes the processed uplink user-plane data flow. Alternatively, the BBU forwards an uplink user-plane data flow to the satellite (or the another device) for processing. A downlink is reverse.

Optionally, in the implementation example shown in FIG. 12, an access SOC, a backhaul SOC, and a backhaul ROC in the network device may not relate to the signal processing process. The access SOC, the backhaul SOC, and the backhaul ROC in the network device may be set to a working state like a silent, sleep, or power-off state, or may be another implementation. This is not limited herein.

It can be learned from the foregoing descriptions that, compared with the independent BTS mode shown in FIG. 8a and FIG. 8b, the implementation of the RRU mode shown in FIG. 12 can support a more flexible frequency band, more flexible transmit power, more flexible quantities of transmit and receive channels, and the like, to improve more application scenarios, wider coverage, and a larger capacity.

To implement the functions in the methods provided in this application, the network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

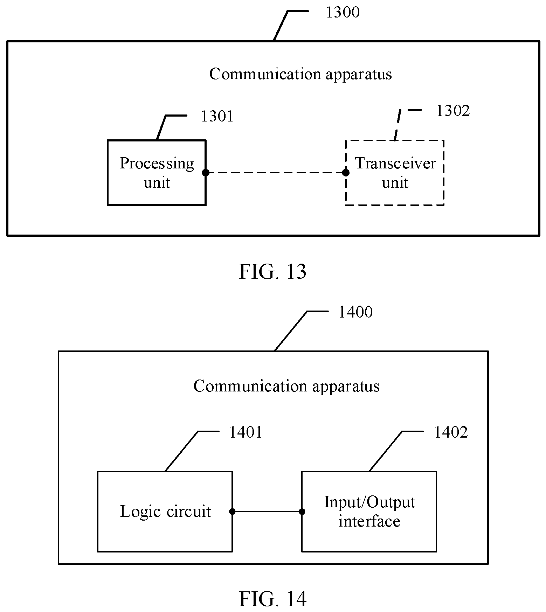

Refer to FIG. 13. An embodiment of this application provides a communication apparatus 1300. The communication apparatus 1300 may implement functions of the network device in the foregoing method embodiments, and therefore can also implement beneficial effect of the foregoing method embodiments. In this application, the communication apparatus 1300 may be the network device, or may be a software module, an integrated circuit, an element, or the like inside the network device, for example, a chip. This is not limited. The following uses an example in which the communication apparatus 1300 is the network device for description.

In a possible implementation, the apparatus 1300 includes a processing unit 1301. The processing unit 1301 is configured to operate a target working mode in M working modes, where M is an integer greater than or equal to 2. The apparatus 1300 includes N modules. When P modules in the N modules run, the apparatus 1300 operates one of the M working modes, where both N and P are positive integers.

Optionally, the processing unit 1301 may be included in the N modules, or the processing unit 1301 may be independent of the N modules. This is not limited herein. For example, when the N modules include at least one processing module, the processing unit 1301 may be configured to perform a function related to the at least one processing module.

Optionally, the apparatus 1300 may further include a transceiver unit 1302. The transceiver unit 1302 is configured to support the apparatus 1300 in performing signal receiving and sending. For example, the transceiver unit 1302 may be included in the N modules. For example, when the N modules include at least one radio frequency link module, the transceiver unit 1302 may be configured to perform a function related to the at least one radio frequency link module.

It should be noted that, for content such as an information execution process of the units in the communication apparatus 1300, refer to the descriptions in the foregoing method embodiments of this application. Details are not described herein again.

FIG. 14 is another diagram of a structure of a communication apparatus 1400 according to this application. The communication apparatus 1400 includes at least a logic circuit 1401. The communication apparatus 1400 may be a chip or an integrated circuit.

Optionally, the communication apparatus further includes an input/output interface 1402.

The transceiver unit 1302 shown in FIG. 13 may be a communication interface. The communication interface may be the input/output interface 1402 in FIG. 14. The input/output interface 1402 may include an input interface and an output interface. Alternatively, the communication interface may be a transceiver circuit, and the transceiver circuit may include an input interface circuit and an output interface circuit.

Optionally, the logic circuit 1401 may be configured to operate a target working mode in M working modes, where M is an integer greater than or equal to 2. The logic circuit 1401 and the input/output interface 1402 may further perform other steps performed by the network device in any one of the foregoing examples and implement corresponding beneficial effect. Details are not described herein again.

In a possible implementation, the processing unit 1301 shown in FIG. 13 may be the logic circuit 1401 in FIG. 14.

Optionally, when the communication apparatus 1400 is a chip or an integrated circuit in the network device, and the network device includes the N modules mentioned in the foregoing embodiments, the logic circuit 1401 is configured to perform a function related to at least one processing module (for example, an SOC and/or a ROC) in the N modules.

Optionally, the logic circuit 1401 may be a processing apparatus, and a part or all of functions of the processing apparatus may be implemented through software. A part or all of functions of the processing apparatus may be implemented through software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate array, FPGA), application-specific integrated circuits (application-specific integrated circuit, ASIC), system-on-a-chips (system-on-chip, SOC), central processing units (central processor unit, CPU), network processors (network processor, NP), digital signal processors (digital signal processor, DSP), micro controller units (micro controller unit, MCU), programmable controller (programmable logic device, PLD) or other integrated chips, or any combination of the foregoing chips or processors.

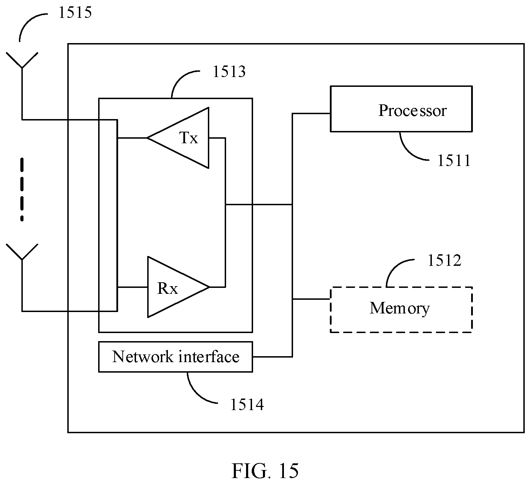

FIG. 15 is a diagram of a structure of a communication apparatus 1500 in the foregoing examples according to this application. The communication apparatus 1500 may be specifically a communication apparatus used as the network device in the foregoing examples. In an example shown in FIG. 15, the network device is implemented by using a network device (or a component in a network device). For a structure of the communication apparatus, refer to the structure shown in FIG. 15.

The communication apparatus 1500 includes at least one processor 1511 and at least one network interface 1514.

Optionally, when the communication apparatus 1500 is a network device, and the network device includes the N modules mentioned in the foregoing embodiments, the at least one processor 1511 is configured to perform a function related to at least one processing module (for example, an SOC and/or a ROC) in the N modules.

Optionally, when the communication apparatus 1500 is a network device, and the network device includes the N modules mentioned in the foregoing embodiments, the at least one network interface 1514 is configured to perform a function related to at least one radio frequency link module (for example, a backhaul radio frequency link module and/or an access radio frequency link module) in the N modules.

Further, optionally, the communication apparatus further includes at least one memory 1512, at least one transceiver 1513, and one or more antennas 1515. The processor 1511, the memory 1512, the transceiver 1513, and the network interface 1514 are connected, for example, connected through a bus. In this application, the connection may include various interfaces, transmission lines, buses, or the like. This is not limited in this embodiment. The antenna 1515 is connected to the transceiver 1513. The network interface 1514 is configured to enable the communication apparatus to communicate with another communication device through a communication link. For example, the network interface 1514 may include a network interface between the communication apparatus and a core network device, for example, an S1 interface. The network interface may include a network interface between the communication apparatus and another communication apparatus (for example, another network device or core network device), for example, an X2 or Xn interface.

The processor 1511 is mainly configured to process a communication protocol and communication data, control the entire communication apparatus, execute a software program, and process data of the software program, for example, is configured to support the communication apparatus in performing actions described in the embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. Functions of the baseband processor and the central processing unit may be integrated into the processor 1511 in FIG. 15. A person skilled in the art may understand that the baseband processor and the central processing unit each may be an independent processor, and are interconnected by using a technology like a bus. A person skilled in the art may understand that the network device may include a plurality of baseband processors to adapt to different network standards, the network device may include a plurality of central processing units to enhance a processing capability of the network device, and components of the network device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1512 may exist independently, and is connected to the processor 1511. Optionally, the memory 1512 may alternatively be integrated with the processor 1511, for example, integrated into a chip. The memory 1512 can store program code for executing the technical solutions in embodiments of this application, and the processor 1511 controls the execution. Various types of computer program code that are executed may also be considered as drivers of the processor 1511.

FIG. 15 shows only one memory and one processor. In an actual network device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in embodiments of this application.

The transceiver 1513 may be configured to support receiving or sending of a radio frequency signal between the communication apparatus and a terminal. The transceiver 1513 may be connected to the antenna 1515. The transceiver 1513 includes a transmitter Tx and a receiver Rx. Specifically, the one or more antennas 1515 may receive a radio frequency signal. The receiver Rx of the transceiver 1513 is configured to: receive the radio frequency signal from the antenna, convert the radio frequency signal into a digital baseband signal or a digital intermediate frequency signal, and provide the digital baseband signal or the digital intermediate frequency signal to the processor 1511, so that the processor 1511 performs further processing, for example, demodulation processing and decoding processing, on the digital baseband signal or the digital intermediate frequency signal. In addition, the transmitter Tx of the transceiver 1513 is further configured to: receive a modulated digital baseband signal or digital intermediate frequency signal from the processor 1511, convert the modulated digital baseband signal or digital intermediate frequency signal into a radio frequency signal, and send the radio frequency signal through the one or more antennas 1515. Specifically, the receiver Rx may selectively perform one-level or multi-level down frequency mixing and analog-to-digital conversion on the radio frequency signal to obtain the digital baseband signal or the digital intermediate frequency signal. A sequence of the down frequency mixing and the analog-to-digital conversion is adjustable. The transmitter Tx may selectively perform one-level or multi-level up frequency mixing processing and digital-to-analog conversion on the modulated digital baseband signal or digital intermediate frequency signal to obtain the radio frequency signal. A sequence of the up frequency mixing processing and the digital-to-analog conversion is adjustable. The digital baseband signal and the digital intermediate frequency signal may be collectively referred to as digital signals.

The transceiver 1513 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. That is, the transceiver unit includes the receiving unit and the sending unit. The receiving unit may also be referred to as a receiver, an input port, a receiving circuit, or the like. The sending unit may be referred to as a transmitter machine, a transmitter, a transmit circuit, or the like.

It should be noted that the communication apparatus 1500 shown in FIG. 15 may be specifically configured to implement steps implemented by the network device in the foregoing method embodiments, and implement technical effect corresponding to these achieved by the network device. For a specific implementation of the communication apparatus 1500 shown in FIG. 15, refer to the descriptions in the foregoing method embodiments. Details are not described herein again.

Division into modules in this application is an example, and is merely logical function division. During actual implementation, another division manner may be used. In addition, functional modules in this application may be integrated into one processor, or may exist alone physically, or two or more modules are integrated into one module. The integrated module may be implemented in a form of hardware, or may be implemented in a form of a software functional module.

All or some of the technical solutions provided in this application may be implemented through software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a special-purpose computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method examples, mutual reference can be made between functions and/or terms in apparatus examples, and mutual reference can be made between functions and/or terms in the apparatus examples and the method examples.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
operating, by a network device, a target working mode in M working modes, wherein M is an integer greater than or equal to 2; and
the network device comprises N modules; and when P modules in the N modules run, the network device operates one of the M working modes, wherein both N and P are positive integers.

2. The method according to claim 1, wherein the N modules comprise at least one processing module and/or at least one radio frequency link module.

3. The method according to claim 2, wherein the processing module comprises a baseband processing module and a radio frequency processing module.

4. The method according to any one of claims 1 to 3, wherein the M working modes comprise at least two of the following working modes:
an integrated access and backhaul IAB mode, a remote relay node RRN mode, a base transceiver station BTS mode, an enhanced digital unit eDU mode, an enhanced radio unit eRU mode, a remote radio unit RRU mode, or a baseband unit BBU mode.

5. The method according to claim 4, wherein the target working mode meets at least one of the following:
when the target working mode is the IAB mode, the P modules comprise a processing module and a radio frequency link module in the N modules, wherein the processing module and the radio frequency link module operate a backhaul mode and an access mode;
when the target working mode is the RRN mode, the P modules comprise a processing module and a radio frequency link module in the N modules, wherein the processing module and the radio frequency link module operate a backhaul mode;
when the target working mode is the BTS mode, the P modules comprise a processing module and a radio frequency link module in the N modules, wherein the processing module and the radio frequency link module operate an access mode;
when the target working mode is the eDU mode, the P modules comprise a processing module and a radio frequency link module in the N modules, wherein the processing module operates an access mode and a backhaul mode, and the radio frequency link module operates a backhaul mode;
when the target working mode is the eRU mode, the P modules comprise a processing module and a radio frequency link module in the N modules, wherein the processing module operates a backhaul mode, and the radio frequency link module operates an access mode and a backhaul mode;
when the target working mode is the RRU mode, the P modules comprise a radio frequency link module in the N modules, wherein the radio frequency link module operates an access mode; or
when the target working mode is the BBU mode, the P modules comprise a processing module in the N modules, wherein the processing module operates an access mode.

6. The method according to claim 4 or 5, wherein the target working mode meets at least one of the following:
when the target working mode is the IAB mode, the P modules comprise a first processing module, a second processing module, a first radio frequency link module, and a second radio frequency link module in the N modules, wherein the first processing module operates a backhaul mode, the second processing module operates an access mode, the first radio frequency module operates a backhaul mode, and the second radio frequency module operates an access mode;
when the target working mode is the RRN mode, the P modules comprise a first processing module and a first radio frequency link module in the N modules, wherein the first processing module and the first radio frequency link module operate a backhaul mode;
when the target working mode is the BTS mode, the P modules comprise a second processing module and a second radio frequency link module in the N modules, wherein the second processing module and the second radio frequency link module operate an access mode;
when the target working mode is the eDU mode, the P modules comprise a first processing module, a second processing module, and a first radio frequency link module in the N modules, wherein the first processing module operates a backhaul mode, the second processing module operates an access mode, and the first radio frequency link module operates a backhaul mode;
when the target working mode is the eRU mode, the P modules comprise a first processing module, a first radio frequency link module, and a second radio frequency link module in the N modules, wherein the first processing module operates a backhaul mode, the first radio frequency link module operates a backhaul mode, and the second radio frequency link module operates an access mode;
when the target working mode is the RRU mode, the P modules comprise a second radio frequency link module in the N modules, wherein the second radio frequency link module operates an access mode; or
when the target working mode is the BBU mode, the P modules comprise a second processing module in the N modules, wherein the second processing module operates an access mode.

7. The method according to any one of claims 1 to 6, wherein the method further comprises:
configuring the network device to operate the target working mode.

8. The method according to claim 7, wherein the method further comprises:
receiving a user operation instruction on a user operation interface, wherein the user operation instruction indicates the target working mode.

9. A network device, wherein the network device comprises N modules, and N is a positive integer;
when P modules in the N modules run, the network device operates one of M working modes, wherein P is a positive integer, and M is an integer greater than or equal to 2; and
the network device operates a target working mode in the M working modes.

10. The network device according to claim 9, wherein the N modules comprise at least one processing module and/or at least one radio frequency link module.

11. The network device according to claim 10, wherein the processing module comprises a baseband processing module and a radio frequency processing module.

12. The network device according to any one of claims 9 to 11, wherein the M working modes comprise at least two of the following working modes:
an integrated access and backhaul IAB mode, a remote relay node RRN mode, a base transceiver station BTS mode, an enhanced digital unit eDU mode, an enhanced radio unit eRU mode, a remote radio unit RRU mode, or a baseband unit BBU mode.

13. The network device according to claim 12, wherein the target working mode meets at least one of the following:
when the target working mode is the IAB mode, the P modules comprise a processing module and a radio frequency link module in the N modules, wherein the processing module and the radio frequency link module operate a backhaul mode and an access mode;
when the target working mode is the RRN mode, the P modules comprise a processing module and a radio frequency link module in the N modules, wherein the processing module and the radio frequency link module operate a backhaul mode;
when the target working mode is the BTS mode, the P modules comprise a processing module and a radio frequency link module in the N modules, wherein the processing module and the radio frequency link module operate an access mode;
when the target working mode is the eDU mode, the P modules comprise a processing module and a radio frequency link module in the N modules, wherein the processing module operates an access mode and a backhaul mode, and the radio frequency link module operates a backhaul mode;
when the target working mode is the eRU mode, the P modules comprise a processing module and a radio frequency link module in the N modules, wherein the processing module operates a backhaul mode, and the radio frequency link module operates an access mode and a backhaul mode;
when the target working mode is the RRU mode, the P modules comprise a radio frequency link module in the N modules, wherein the radio frequency link module operates an access mode; or
when the target working mode is the BBU mode, the P modules comprise a processing module in the N modules, wherein the processing module operates an access mode.

14. The network device according to claim 12 or 13, wherein the target working mode meets at least one of the following:
when the target working mode is the IAB mode, the P modules comprise a first processing module, a second processing module, a first radio frequency link module, and a second radio frequency link module in the N modules, wherein the first processing module operates a backhaul mode, the second processing module operates an access mode, the first radio frequency module operates a backhaul mode, and the second radio frequency module operates an access mode;
when the target working mode is the RRN mode, the P modules comprise a first processing module and a first radio frequency link module in the N modules, wherein the first processing module and the first radio frequency link module operate a backhaul mode;
when the target working mode is the BTS mode, the P modules comprise a second processing module and a second radio frequency link module in the N modules, wherein the second processing module and the second radio frequency link module operate an access mode;
when the target working mode is the eDU mode, the P modules comprise a first processing module, a second processing module, and a first radio frequency link module in the N modules, wherein the first processing module operates a backhaul mode, the second processing module operates an access mode, and the first radio frequency link module operates a backhaul mode;
when the target working mode is the eRU mode, the P modules comprise a first processing module, a first radio frequency link module, and a second radio frequency link module in the N modules, wherein the first processing module operates a backhaul mode, the first radio frequency link module operates a backhaul mode, and the second radio frequency link module operates an access mode;
when the target working mode is the RRU mode, the P modules comprise a second radio frequency link module in the N modules, wherein the second radio frequency link module operates an access mode; or
when the target working mode is the BBU mode, the P modules comprise a second processing module in the N modules, wherein the second processing module operates an access mode.

15. A network device, comprising at least one processor and a memory, wherein the at least one processor is coupled to the memory, and the processor is configured to perform the method according to any one of claims 1 to 8.

16. A computer-readable storage medium, wherein the medium stores instructions, and when the instructions are executed by a computer, the method according to any one of claims 1 to 8 is implemented.

17. A computer program product, comprising instructions, wherein when the instructions are run on a computer, the computer is enabled to perform the method according to any one of claims 1 to 8.
